# EUROPEAN PATENT APPLICATION

(11) **EP 4 851 825 A1**
(43) Date of publication of application: **09.12.2026**
(21) Application number: 26175348.7
(22) Date of filing: 29.04.2026
(51) Int. Cl.: G06F 16/953

(54) **IMAGE PROCESSING SYSTEM, IMAGE PROCESSING PROGRAM, AND IMAGE PROCESSING METHOD**

(30) Priority: 03.06.2025 JP 2025092539
(71) Applicant: Brother Kogyo Kabushiki Kaisha, Nagoya-shi, Aichi 467-8561 (JP)
(72) Inventor: OKUNO, Tetsuya, Nagoya, 467-8562 (JP); INAYOSHI, Yuto, Nagoya, 467-8562 (JP)
(74) Representative: J A Kemp LLP

(57) **Abstract**

An image processing system includes an image processing apparatus and a first artificial intelligence system having a first generative AI. The image processing system includes: an acceptance part, which accepts an image processing instruction to the image processing apparatus from a user and accepts identification information of the image processing apparatus and a request relating to the image processing apparatus from the user; and an output part which receives a performance result of a task from an execution part and to output a response to the request based on the performance result. The execution part causes the first artificial intelligence system to perform the task in accordance with the request. The task includes searching for information relating to the image processing apparatus specified by the identification information from a database relating to a plurality of types of image processing apparatuses based on information included in the request.

## Description

### TECHNICAL FIELD

The present disclosure relates to an image processing system, an image processing program, and an image processing method for processing images using an image processing apparatus.

### BACKGROUND ART

A known technique aims to generate responses to various requests from a user using large language models (LLMs), as described, for example, in Patent Literature 1. Patent Literature 1 discloses performing internet searches in response to questions received from the user using an LLM with RAG functionality and providing responses based on the search results.

### Citation list

### [Patent Literature]

Patent Literature 1: Japanese Patent No. 7574495

### SUMMARY

### Problem to be Solved by the Invention:

For a user to fully utilize an image processing apparatus such as a printer, it has been necessary for the user to acquire sufficient knowledge regarding the specific image processing apparatus used by the user. In order to acquire this sufficient knowledge, the user has to study information sources such as manuals and specifications related to the specific image processing apparatus. The technology described in Patent Literature 1 lacks means for the user to appropriately use the image processing apparatus without acquiring sufficient knowledge.

The purpose of this disclosure is to provide technology in an image processing system, image processing program, and image processing method that processes images using an image processing device, enabling users to appropriately use the image processing apparatus without acquiring sufficient knowledge.

### Solution to the problem:

An image processing system relating to an aspect of the present disclosure includes an image processing apparatus and a first artificial intelligence system having a first generative AI. The image processing system includes: an acceptance part configured to accept an image processing instruction to the image processing apparatus from a user, the acceptance part being configured to accept identification information of the image processing apparatus and a request relating to the image processing apparatus from the user; and an output part configured to receive a performance result of a task from an execution part and to output a response to the request based on the performance result. The execution part is configured to cause the first artificial intelligence system to perform the task in accordance with the request accepted by the acceptance part, and the task includes searching for information relating to the image processing apparatus specified by the identification information from a database relating to a plurality of types of image processing apparatuses based on information included in the request.

The image processing system relating to the present disclosure includes: the acceptance part; the execution part; and the output part. In response to the request relating to the image processing apparatus from the user, the acceptance part accepts the request. The execution part causes the first artificial intelligence system to perform the task in accordance with the request accepted by the acceptance part. The execution part causes the first artificial intelligence system to perform the task including searching for information relating to the image processing apparatus from a database relating to a plurality of types of image processing apparatuses based on information included in the request. Therefore, the image processing system can output a response relating to the image processing apparatus more accurately as compared with a case of using the Internet as an information source. As a result, according to the present disclosure, since necessary knowledge can be obtained from the database, it is possible for the user to appropriately use the image processing apparatus even without acquiring sufficient knowledge.

### Effect of the Invention:

According to the present disclosure, a user can appropriately use an image processing apparatus even without acquiring sufficient knowledge.

### BRIEF DESCRIPTION OF DRAWINGS

FIG. 1 is a diagram illustrating an example of a configuration of an image processing system according to an embodiment.
FIG. 2 is a diagram illustrating an example of a functional configuration of a service server.
FIG. 3 is a diagram representing an example of setting instruction information contained in a setting instruction information database.
FIG. 4 is a diagram illustrating an example of a hardware configuration of a controller and an artificial intelligence system.
FIG. 5 is a diagram illustrating an example of a hardware configuration of a printer.

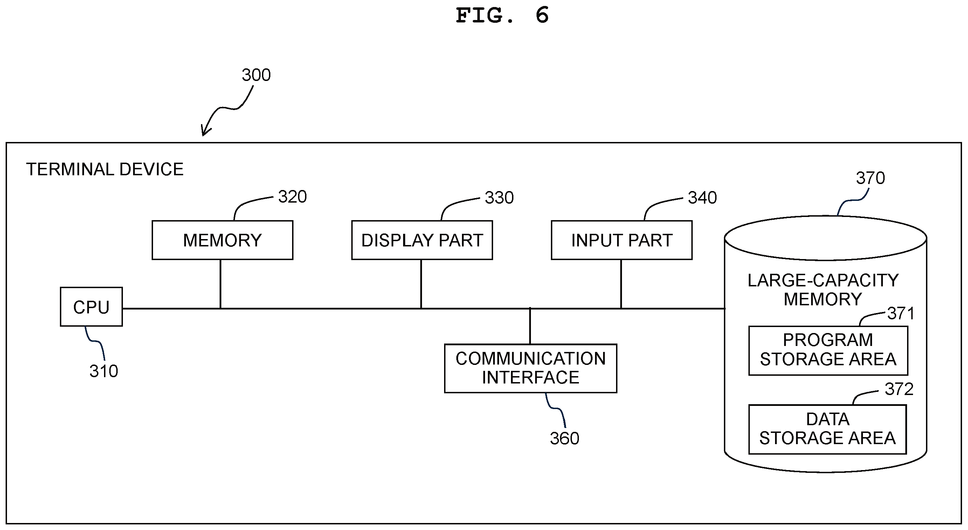

FIG. 6 is a diagram illustrating an example of a hardware configuration of a terminal device.
FIGs. 7A and 7B are a sequence diagram in a case where a user asks a question relating to print settings and the image processing system outputs an answer to the question.
FIG. 8 is a diagram representing an example of a screen including a response message displayed on a display part of the terminal device in step S60 of FIG. 7B.
FIG. 9 is a diagram representing an example of a screen displayed in a case where the user presses a button in FIG. 8.
FIG. 10 is a diagram representing another example of a screen displayed in a case where the user presses another button in FIG. 8.
FIG. 11 is a diagram representing still another example of a screen displayed in a case where the user presses still another button in FIG. 8.
FIG. 12 is a diagram representing another example of a screen displayed in the display part of the terminal device.
FIG. 13 is a diagram representing still another example of a screen displayed in the display part of the terminal device.
FIG. 14 is a diagram representing yet another example of a screen displayed in the display part of the terminal device.
FIG. 15 is a diagram representing an example of a setting screen for print setting displayed in display part of the terminal device when the user selects one print setting from a plurality of print settings included in the response message.
FIG. 16 is a diagram representing an example of the setting screen for the print setting in a case of normal printing.
FIGs. 17A and 17B are a sequence diagram in a case where the user asks a question relating to an operation of the printer and the image processing system outputs an answer to the question.
FIG. 18 is a diagram representing an example of a screen including a response message displayed in the display part of the terminal device in step S170 of FIG. 17B.
FIGs. 19A and 19B are a sequence diagram in a case where the user asks a question relating to a status of the printer and the image processing system outputs an answer to the question.
FIG. 20 is a diagram representing an example of a screen including a response message displayed in the display part of the terminal device in step S260 of FIG. 19B.
FIG. 21 is a diagram representing an example of a screen including a response message displayed in a display part of the printer in a case where the user prints an image by directly operating the printer.
FIG. 22 is a diagram representing an example of a screen including a response message displayed in a display part of the printer in a case where the user prints an image by directly operating the printer.
FIGs. 23A and 23B are a sequence diagram representing processes performed by the printer, a controller, and an artificial intelligence system, respectively, to display the screens illustrated in FIGs. 21 and 22.

### DESCRIPTION OF THE EMBODIMENT

In the following, an embodiment will be described with reference to the drawings.

### Image processing system

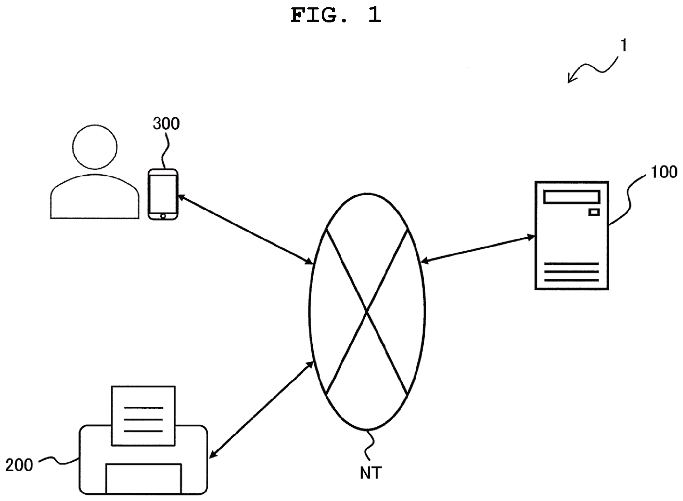

FIG. 1 is a diagram illustrating an example of the configuration of an image processing system 1 according to the embodiment. As illustrated in FIG. 1, the image processing system 1 includes a service server 100, a printer 200, and a terminal device 300. The service server 100, the printer 200, and the terminal device 300 are connected to a network NT and are capable of communicating with one another. The network NT includes, for example, the Internet, mobile phone communication lines, etc.

### Service Server

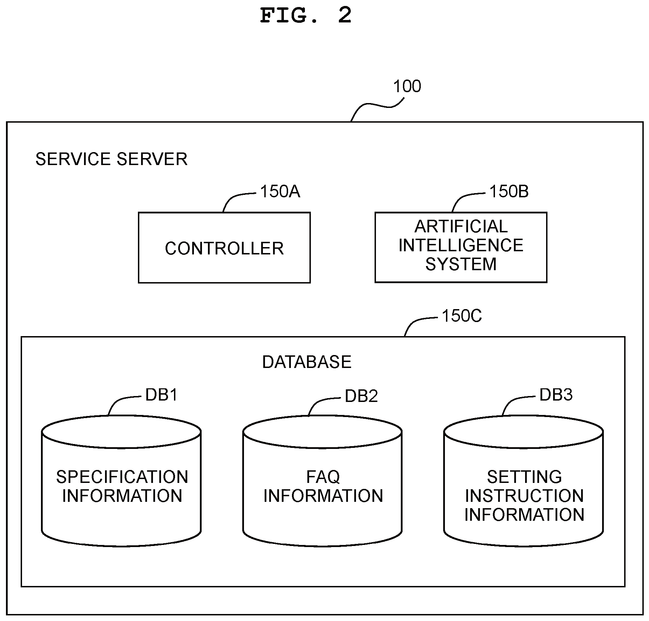

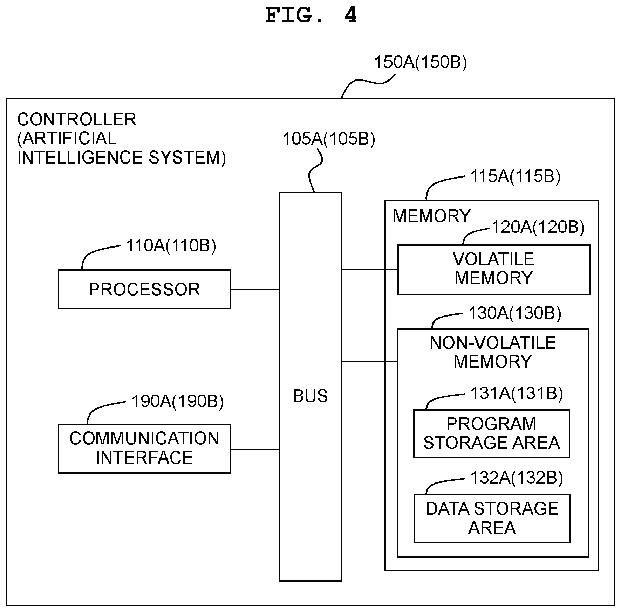

FIG. 2 is a diagram illustrating an example of the functional configuration of the service server 100. The service server 100 is, for example, a server computer including an artificial intelligence. As illustrated in FIG. 2, the service server 100 includes a controller 150A, an artificial intelligence system 150B and a database 150C. The controller 150A includes a processor 110A, a memory 115A, and a communication interface 190A, etc., as illustrated in FIG. 4 which will be described later. The controller 150A generates a prompt based on information included in a request from a user, the prompt causing the artificial intelligence system 150B to perform a task, and outputs the prompt to the artificial intelligence system 150B. The artificial intelligence system 150B includes Large language Models (LLM). The artificial intelligence system 150B is a system with a Retrieval Augmented Generation (RAG) function that extends language generation capability of the LLM by combining search technology for the database 150C. Note that the LLM differs from a specialized language model which requires tuning. An example of the LLM is Generative Pre-trained Transformer (GPT; a registered trademark of OpenAI, Inc.). The artificial intelligence system 150B performs various natural language processing tasks such as information search, text classification, sentiment analysis, information extraction, text summarization, text generation, and question-answering, based on the prompt input by the controller 150A. In the present embodiment, the artificial intelligence system 150B performs tasks including searching for information relating to the printer 200 from the database 150C, based on the prompt. The artificial intelligence system 150B generates message information based on performance results of the tasks. The artificial intelligence system 150B then outputs the message information to the controller 150A. The controller 150A transmits the message information to the terminal device 300. The terminal device 300 displays a screen including the received message information and outputs a response to the request from the user. Note that the service server 100 is an example of a "server". The LLM is an example of a "first generative AI", and the artificial intelligence system 150B is an example of a "first artificial intelligence system".

The database 150C includes a plurality of types of databases relating to the printer 200. As illustrated in FIG. 2, the database 150C includes a specification information database DB1, a FAQ information database DB2, and a setting instruction information database DB3. The specification information database DB1 stores specification information for the printer 200 for each model of the printer 200. The specification information includes, for example, information relating to functions, performance, and specifications of the printer 200. The FAQ information database DB2 stores FAQ (Frequently Asked Questions) information for the printer 200 for each model of the printer 200. The FAQ information is information relating to questions frequently asked by users. The setting instruction information database DB3 stores setting instruction information for each model of the printer 200. The setting instruction information is information relating to a format for the artificial intelligence system 150B to generate message information based on search results of the specification information and the FAQ information.

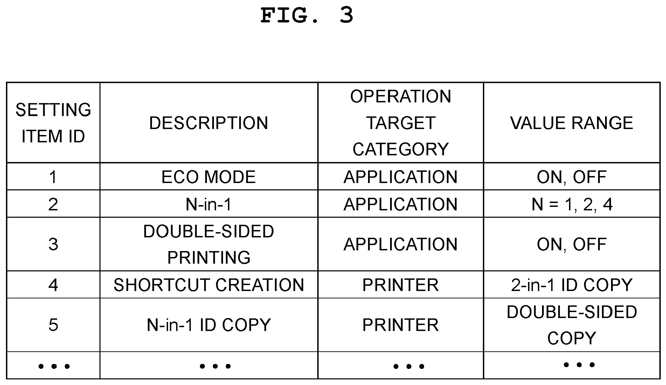

FIG. 3 is a diagram representing an example of the setting instruction information stored in the setting instruction information database DB3. In the example illustrated in FIG. 3, the setting instruction information database DB3 has a setting item ID, a description, an operation target category, and a value range. For example, a setting item relating to an eco-mode has a printing application of the terminal device 300 as an operation target, and the possible value for the setting item is ON or OFF. Furthermore, a setting item relating to N-in-1 has the printing application of terminal device 300 as the operation target, and the possible value for the setting value N is 1, 2, or 4. Note that N-in-1 is a layout setting to print N print images on one side of a single sheet. Furthermore, a setting item relating to double-sided printing has the printing application of the terminal device 300 as the operation target, and the possible value for the setting item is ON or OFF. Additionally, a setting item relating to shortcut creation has the printer 200 as the operation target, and the possible value for the setting value is 2-in-1 ID Copy or double-sided copy. The 2-in-1 ID Copy is a function for scanning both the front and back sides of a copy target document and prints them at actual size on one side of the sheet. A setting item relating to N-in-1 ID Copy has the printer 200 as the operation target, and the setting value N can be either 1 or 2. The artificial intelligence system 150B selects the setting items for the setting instruction information based on the search results for the specification information and the FAQ information, and generates message information based on the value range corresponding thereto.

The controller 150A, the artificial intelligence system 150B, and the database 150C may be separated into two or more units and configured as two or more independent server computers. The artificial intelligence system 150B may also be configured by dividing it into a plurality of artificial intelligence systems. The database 150C may also be configured by dividing it into a plurality of databases.

FIG. 4 is a diagram illustrating an example of hardware configuration of the controller 150A and the artificial intelligence system 150B. In FIG. 4, the symbols outside the parentheses indicate the configuration of the controller 150A, and the symbols inside the parentheses indicate the configuration of the artificial intelligence system 150B. Some parts of the hardware configurations of the controller 150A and the artificial intelligence system 150B may be common. As illustrated in FIG. 4, the controller 150A includes a processor 110A, a memory 115A, and a communication interface 190A. The bus 105A connects the processor 110A, the memory 115A, and the communication interface 190A to enable data transmission and reception therebetween.

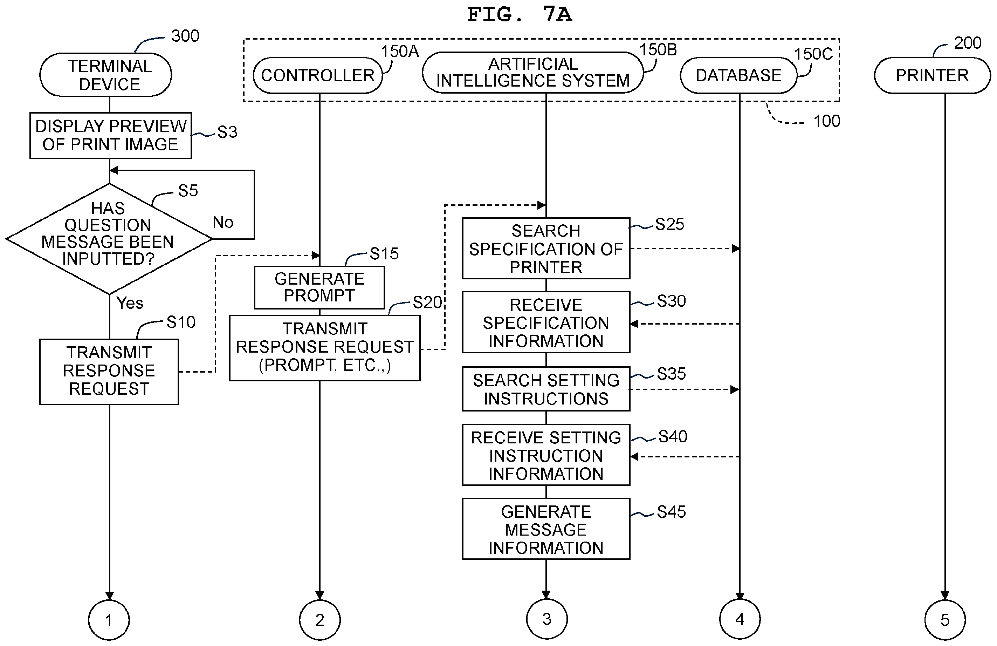

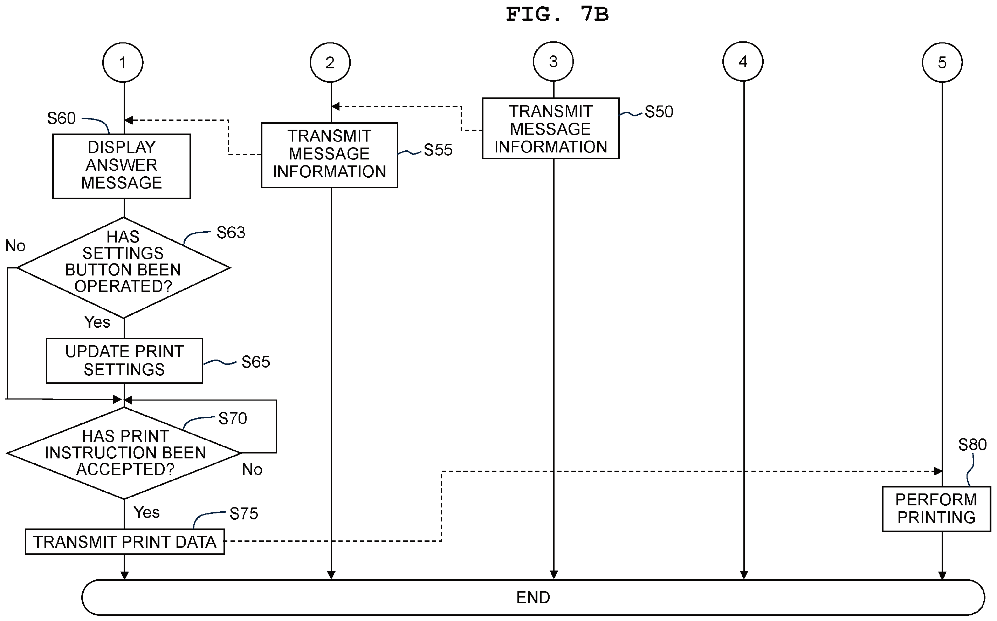

The memory 115A includes a volatile memory 120A and a non-volatile memory 130A. The volatile memory 120A is, for example, a DRAM, and stores various programs and data which are to be processed. The non-volatile memory 130A is, for example, a hard disk drive or a solid-state drive, and has a program storage area 131A and a data storage area 132A. The program storage area 131A stores various programs. The various programs include a processing program, etc., based on the sequences, etc., which are illustrated in FIGs. 7, 17, 19, and 23, etc., and which will be described later. The data storage area 132A stores various data generated or used by the various programs.

The processor 110A is a device which performs data processing, and includes, for example, a CPU. The processor 110A executes the various programs stored in the program storage area 131A. The processor 110A performs various processes, including data communication with respect to the printer 200 and the terminal device 300, and data communication with respect to the artificial intelligence system 150B. An AI agent program is stored in the program storage area 131A. In response to the processor 110A executing the AI agent program, the processor 110A receives a request including a message or an image inputted by the user. The processor 110A analyzes the message or the image included in the received request and generates a prompt based on the results of the analysis. The processor 110A transmits the generated prompt to the artificial intelligence system 150B and receives a response from the artificial intelligence system 150B. The processor 110A transmits, to the terminal device 300, a response based on the response received from the artificial intelligence system 150B.

The communication interface 190A is a network interface including a communication circuit configured to connect to the network NT to thereby perform data communication with respect to the printer 200 or the terminal device 300. The communication interface 190A is also an interface including a communication circuit configured to perform data communication with respect to the artificial intelligence system 150B or the database 150C.

Note that the configuration of the memory 115A is not limited to the configuration described above in view of the device elements or components. For example, the memory 115A may be RAM, ROM, EEPROM, HDD, a portable storage medium such as a USB memory device attachable to the service server 100, a buffer included in the processor 110A, etc. Alternatively, the memory 115A may be configured by combining the above-described RAM, ROM, EEPROM, HDD, portable storage medium, and the buffer, etc.

Further, the memory 115A may be a computer-readable storage medium. A computer-readable storage medium is a non-transitory medium. The non-transitory medium also includes a recording medium such as CD-ROM, DVD-ROM, etc. Furthermore, a non-transitory medium is also a tangible medium. A memory 115B, a storage part 215 of the printer 200, or a memory 320 of the terminal device 300, which will be described later, may also be the storage media as described above.

As illustrated in FIG. 3, the artificial intelligence system 150B includes a processor 110B, a memory 115B, and a communication interface 190B. A bus 105B connects the processor 110B, the memory 115B, and the communication interface 190B such that data can be transmitted and received among the processor 110B, the memory 115B, and the communication interface 190B.

The memory 115B includes a volatile memory 120B and a non-volatile memory 130B. The volatile memory 120B, for example, is a DRAM and stores various programs and data to be processed. The non-volatile memory 130B is, for example, a hard disk drive or a solid-state drive, and has a program storage area 131B and a data storage area 132B. The program storage area 131B stores the LLM and various programs necessary for operating the LLM. The various programs include a processing program, etc., based on the sequences, etc., which are illustrated in FIGs. 7, 17, 19, and 23, etc., and which will be described later. The data storage area 132B stores various data generated or used by the various programs. The various data includes the LLM and various data sets necessary for operating the LLM.

The processor 110B is a device which performs data processing and includes a CPU and a GPU. The processor 110B executes the various programs stored in the program storage area 131B. The processor 110B performs various processes using the LLM. The processor 110B accepts a prompt generated by an AI agent program and outputs a response to an instruction or a question in the prompt.

The communication interface 190B is a network interface including a communication circuit configured to connect to the network NT to thereby perform data communication with the printer 200 or the terminal device 300. The communication interface 190B is also an interface including a communication circuit configured to perform data communication with respect to the controller 150A.

### Printer

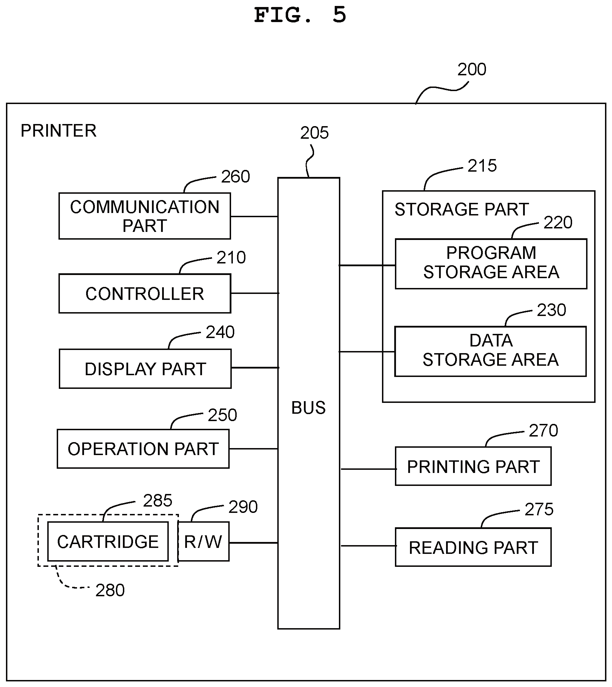

FIG. 5 is a diagram illustrating an example of the hardware configuration of the printer 200. As illustrated in FIG. 5, the printer 200 includes a controller 210, a storage part 215, a display part 240, an operation part 250, a communication part 260, a printing part 270, a reading part 275, etc. A bus 205 connects the controller 210, the storage part 215, the display part 240, the operation part 250, the communication part 260, the printing part 270, and the reading part 275 such that information can be transmitted and received among the controller 210, the storage part 215, the display part 240, the operation part 250, the communication part 260, the printing part 270, and the reading part 275. The printer 200 is an example of an "image processing apparatus".

The storage part 215 is, for example, RAM, ROM, EEPROM, HDD, etc. The storage part 215 stores various programs 220 and various data 230. The various programs 220 include, for example, the processing program, etc., based on the sequences illustrated in FIGs. 7, 19 and 23, which will be described later, etc. The various data 230 includes a printer ID, print data received from the terminal device 300, etc. The various data 230 may also include, for example, capability information relating to printing performed by the printer 200, the status information relating to the printer 200, etc., in addition to the above-described printer ID, print data received from the terminal device 300, etc.

The controller 210 is a device configured to perform data processing; the controller 210 is, for example, a processor such as a CPU, etc. The controller 210 executes the various programs stored in the storage part 215. The display part 240 is, for example, a liquid crystal display, and is configured to display a screen including various information items on the display. The operation part 250 is, for example, a keyboard, a button, etc., and configured to accept an input operation performed by the user. The user is capable of inputting various instructions to the printer 200 by operating the operation part 250. The communication part 260 is connected to the network NT and is capable of communicating with the service server 100 and the terminal device 300. The printing part 270 includes a printing engine, and is configured to cause a non-illustrated conveyor to pick up a sheet from a sheet tray and convey the sheet, and to form an image in, for example, the ink-jet system on the sheet.

The printer 200 includes a plurality of cartridge holders 280 each of which accommodates a corresponding one of a plurality of cartridges 285. The plurality of cartridges 285 are, for example, cartridges for a corresponding one of inks of a plurality of colors which are, for example, cyan, magenta, yellow, black, etc.

The printing part 270 performs a printing process of printing an image onto a sheet while consuming the ink from each of the cartridges 285. The printing process is an example of image processing. Each of the cartridge holders 280 includes a reader-writer 290. The reader-writer 290 is configured to read and write cartridge information from and to an IC chip included in each of the cartridges 285 accommodated in the corresponding one of the cartridge holders 280. For example, the reader-writer 290 reads the cartridge information from the IC chip to thereby detect the type, etc., of each of the cartridges 285 accommodated in the corresponding one of the cartridge holders 280. Note that the printer 200 may obtain a usage amount of the ink or a remaining amount of the ink, in each of the cartridges 285, which is stored in the IC chip, based on the above-described reading performed by the reader-writer 290.

The reading part 275 includes an image reading sensor such as a Contact Image Sensor (CIS) or a Charge-Coupled Device (CCD). The reading part 275 performs a reading process for causing the image reading sensor to read an original placed in a non-illustrated Flatbed (FB) or an Automatic Document Feeder (ADF).

### Terminal Device

The terminal device 300 is a mobile terminal such as a smartphone, etc. The terminal device 300 may also be a general-purpose personal computer such as a notebook computer, a desktop computer, etc. FIG. 5 is a diagram illustrating an example of the hardware configuration of the terminal device 300. As illustrated in FIG. 5, the terminal device 300 includes a CPU 310, a memory 320 such as working memory, a display part 330, an input part 340, a communication interface 360, and a large capacity memory 370.

The large capacity memory 370 includes a program storage area 371 and a data storage area 372. The large capacity memory 370 is, for example, a hard disk drive or a flash memory. The program storage area 371 stores various programs. The various programs include, for example, the printing application program based on the sequence, etc., described later and illustrated in FIGs. 7, 17, and 19, etc. The CPU 310 executes the various programs stored in the program storage area 371. The communication interface 360 includes a communication circuit configured to connect to and communicate with the network NT. The CPU 310 performs various processes, including data communication with the service server 100 and the printer 200 via the network NT and the communication interface 360.

The display part 330 is, for example, a touch panel, a liquid crystal display, etc., and configured to display various information items. The input part 340 is, for example, a touch panel, a keyboard, a mouse, etc., and accepts various operations by the user. The user is capable of inputting various instructions to the terminal device 300 by operating the input part 340.

### Features of Present Embodiment

In the image processing system 1 of this embodiment, the terminal device 300 receives a question message from the user regarding the printer 200 as a request. The question message includes, for example, questions about print settings, questions about operation of the printer 200, questions about the status of the printer 200, etc. The terminal device 300 transmits the received question message to the controller 150A. The controller 150A generates a prompt based on the information used in the question message to instruct artificial intelligence system 150B to execute a task, and transmits this prompt to artificial intelligence system 150B. The artificial intelligence system 150B searches for information about printer 200 in database 150C based on the received prompt. The artificial intelligence system 150B generates message information based on the search results and transmits it to the controller 150A. The controller 150A transmits the message information to the terminal device 300. The terminal device 300 displays a response message to the user's question message on the display part 330 based on the received message information.

This enables the output of more accurate responses regarding the printer 200 than when using the Internet as the information source. As a result, according to this embodiment, since the necessary knowledge can be obtained from the database 150C, the user can appropriately use the printer 200 even without acquiring sufficient knowledge. Details of this will be explained below.

### Processing performed by Image Processing System in a case of asking Questions regarding Print Settings

FIGs. 7A and 7B are a sequence diagram illustrating a case where a user asks a question about print settings and the image processing system 1 outputs an answer to the question. In FIGs. 7A and 7B, the terminal device 300, the controller 150A, the artificial intelligence system 150B, and the printer 200 each execute their respective processes. The entities executing each process are the CPU 310 of the terminal device 300, the processor 110A of the controller 150A, the processor 110B of the artificial intelligence system 150B, and the controller 210 of the printer 200.

The terminal device 300 first accepts a selection of the printer ID of the printer 200 from the user to perform printing within the printing application. The printer ID is an example of identification information for the image processing apparatus. In step S3, the terminal device 300 displays a print preview image on the display part 330. This preview shows the print result when the user-selected print image is printed on the selected printer 200. In this embodiment, the "print image" refers to image data copied by the terminal device 300 from an image file or document stored in the data storage area 372 for editing purposes. Image files stored in the data storage area 372 include, for example, image files such as JPEG format files. Documents stored in the data storage area 372 include, for example, documents such as PDF format files. Furthermore, the "print preview image" refers to image data output for previewing the "print image". The image data output for previewing includes, for example, image data such as JPEG format data.

In step S5, the terminal device 300 determines whether it has received input of a question message regarding print settings from the user. The question message regarding print settings is, for example, "Can I save paper?". The terminal device 300 repeats the processing of step S5 until it determines that it has received input of the question message (step S5: No). If the terminal device 300 determines that it has received the input of the question message (step S5: Yes), the terminal device 300 proceeds with the next step S10. The question message regarding print settings is an example of a user request relating to the image processing apparatus. Upon the Yes determination in this step S5, the terminal device 300 accepts the question message concerning the printer 200 as a request. The CPU 310 of the terminal device 300, which performs the processing corresponding to the Yes determination in step S5, is an example of an acceptance part. That is, the terminal device 300 includes an acceptance part. Furthermore, the CPU 310 of the terminal device 300 is an example of a computer, and the Yes determination in step S5 is an example of an accepting process and an accepting step.

In step S10, the terminal device 300 transmits a response request to the controller 150A for the question message received in step S5. The response request includes the question message received in step S5 and the printer ID, etc. The controller 150A receives the response request from the terminal device 300.

In step S15, the controller 150A generates a prompt to execute a task by the artificial intelligence system 150B based on information used in the user's question message. The task includes searching for information about a specific printer 200 within a search scope based on the specific printer 200 identified by the printer ID. The search scope based on the printer 200 is, for example, specification information and configuration instruction information related to a specific model of printer 200 identified by the printer ID. Furthermore, the task includes searching for information about the printer 200 within a search scope based on language information used in the user's question message. The search scope based on the language information is, for example, specification information and setting instruction information relating to terms contained in the question message.

In step S20, the controller 150A transmits a response request to the artificial intelligence system 150B. The response request includes the prompt generated in step S15, the question message input by the user, the printer ID, etc. That is, the controller 150A inputs the generated prompt into the artificial intelligence system 150B.

Through steps S15 and S20, the controller 150A causes the artificial intelligence system 150B to perform a task corresponding to the question message received by the terminal device 300. For example, the controller 150A causes the artificial intelligence system 150B to perform a task including searching for an answer to the question. Furthermore, the controller 150A causes the artificial intelligence system 150B to perform a task that includes searching a database 150C containing information on multiple types of printers 200 for information about the printer 200 identified by the printer ID, based on the information used in the question message. Additionally, the controller 150A causes the artificial intelligence system 150B to perform a task that includes searching for information about the specific printer 200 within a search scope based on the printer ID identifying that specific printer 200. Furthermore, the controller 150A performs a task that includes searching for information about the printer 200 within a search scope based on the language information used in the question message. Specifically, the controller 150A performs a task that includes searching for the product specifications of the target printer 200 from the printer ID and creating a list of options containing only those functions supported by that printer 200 that are relevant to the user's question message. Furthermore, the controller 150A performs a task to select setting items from the created list of options and generate message information based on the corresponding value ranges. The processor 110A of the controller 150A, which performs steps S15 and S20, is an example of an execution unit. That is, the service server 100 includes an execution unit. Furthermore, the processor 110A of the controller 150A is an example of a computer, and steps S15 and S20 are examples of an executing process and an executing step.

In step S25, the artificial intelligence system 150B searches for the printer 200's specifications based on the prompt included in the response request received from the controller 150A. At this time, the artificial intelligence system 150B searches for the specifications of the printer 200, identified by the printer ID, from the specification information database DB1 in the database 150C. Specifically, the artificial intelligence system 150B performs the search using an API (Application Programming Interface) that searches for product specifications based on the printer ID.

In step S30, the artificial intelligence system 150B receives the search results for the specification information from the specification information database DB1.

In step S35, the artificial intelligence system 150B searches for setting instruction information based on the prompt included in the response request received from the controller 150A. At this time, the artificial intelligence system 150B searches for setting instruction information related to the specification information received in step S30 from the setting instruction information database DB3 in database 150C. Specifically, the artificial intelligence system 150B performs the search using an API that searches for the setting instruction information.

In step S40, the artificial intelligence system 150B receives the search results for the setting instruction information from the setting instruction information database DB3.

In step S45, the artificial intelligence system 150B generates message information that serves as a response to the user's question message based on the specification information and the setting instruction information.

In step S50, the artificial intelligence system 150B transmits the generated message information to the controller 150A.

In step S55, the controller 150A receives the message information from the artificial intelligence system 150B and transmits it to the terminal device 300. The controller 150A may process the message information as necessary to make it suitable for display on the terminal device 300.

In step S60, the terminal device 300 displays a response message to the user's question message on the display part 330 based on the message information received from the controller 150A. The response message includes print settings. The response message is an example of a response to the request. That is, the terminal device 300 outputs an answer to the user's question. In other words, the terminal device 300 outputs a response to the user's request based on the execution result of the task received from the controller 150A. The CPU 310 of the terminal device 300 executing this step S60 is an example of an output part. That is, the terminal device 300 includes an output part. Furthermore, step S60 is an example of an outputting process and an outputting step.

In step S63, the terminal device 300 determines whether it has received a selection operation for a setting button via the input part 340. The terminal device 300 displays various buttons related to print settings within the screen displayed in step S60. These various buttons correspond, for example, to buttons B2 to B9 described later. If the terminal device 300 determines that it has received the selection operation for any of buttons B2 to B9 (step S63: Yes), the terminal device 300 proceeds with step S65. If the terminal device 300 determines that it has not received the selection operation for any of buttons B2 to B9 (step S63: No), the terminal device 300 proceeds with step S70.

In step S65, the terminal device 300 updates the print settings of the print application corresponding to the button selected in S63. The terminal device 300 updates the print settings based on the input content entered by the user via the input part 340 in response to the response message displayed on the display part 330 in step S60. If the response message contains multiple print settings, the terminal device 300 changes to the print setting selected by the user.

In step S70, the terminal device 300 determines whether it has received a print instruction from the user indicating performance of printing. If the terminal device 300 determines that it has not received the print instruction (step S70: No), the terminal device 300 returns the process to step S70. If the terminal device 300 determines that it has received the print instruction (step S70: Yes), the terminal device 300 proceeds with the next step S75. Upon this Yes determination in step S70, the terminal device 300 receives instructions from the user for the print processing directed at the printer 200. The CPU 310 of the terminal device 300, which performs the processing corresponding to the Yes determination in step S70, is an example of the acceptance part. That is, the terminal device 300 includes an acceptance part. Furthermore, the Yes determination in step S70 is an example of the accepting process and accepting step.

In step S75, the terminal device 300 transmits print data for the print image based on the print settings updated in step S65 to the printer 200. That is, the terminal device 300 transmits an instruction to perform the print processing based on the print settings updated in step S65 to the printer 200. If the response message contains multiple print settings, the updated print setting includes the print setting selected by the user. The terminal device 300 may transmit the print data to the printer 200 via the service server 100. The CPU 310 of the terminal device 300 executing this step S75 is an example of an instruction transmission part. With this, the image processing system 1 completes its processing.

### Specific Example of Prompt

Next, specific examples of prompts generated by the controller 150A in step S15 of FIG. 7A are shown. Note that the prompts illustrated below may be pre-generated and stored in, for example, the memory 115A of the controller 150A. Alternatively, the controller 150A may generate them in real time in response to a response request from the terminal device 300. The path described within the prompt indicates the storage location where the API specifications are stored. This storage location may be the data storage area 132A or a server different from the service server 100 connected to the network NT.

### Prompt

Please respond to the question message following the example below.
- Search the product specifications for the target printer using its printer ID, and create a list of options containing only functions supported by the printer.
- For questions that cannot be determined from the product specifications, search the FAQ results and create a list of options containing only the functions supported by the printer.
- If a current status of the printer is required, acquire the status and suggest solutions based on the acquired status.
- If the options are unknown, perform the following:
- If the operation procedure is known, output the operation procedure.
- If the operation procedure is unknown, output an empty <message information></message information>.

The following tools can be used:
- API to search product specifications using printer ID
   https://xxx/api1/doc
- API to search past FAQs
   https://xxx/api2/doc
- API to search setting instructions
   https://xxx/api3/doc
- API to acquire device status
   https://xxx/api4/doc

The following input example is an example of a case where a user inputs a question message regarding print settings, such as "Can I save paper?".

### Input Example:

```
<input message>Can I save paper?</input message>
          <printer ID>1234
          </printer ID>
```

### Specific Example of Specification Information

Next, a specific example of the specification information retrieved by the artificial intelligence system 150B from the database 150C in step S30 of FIG. 7A is illustrated. This specification information is an example of a case where the user's question message is, for instance, "Can I save paper?" and the printer 200 is equipped with a double-sided printing function.

```
<specification information>
          <model name>Printer01</model name>
          <function list>
           <function>
            <title>2-in-1 printing</title>
            <description>Allows printing two pages on a single sheet of paper</description>
           </function>
           <function>
            <title>4-in-1 printing</title>
            <description>Allows printing four pages on a single sheet of paper</description>
           </function>
           <function>
            <title>double-sided printing</title>
            <description>Allows printing two pages on both sides of a single sheet of
            paper</description>
           </function>
           <function>
            <title>shortcut creation</title>
            <description>Allows creating convenient shortcut functions on the printer such as
            2-in-1 ID or double-sided copying</description>
           </function>
          </function list>
          </specification information>
```

Note that if, for example, the printer 200 does not have the double-sided printing function, the following section will be removed from the specification information.

```
<function>
            <title>double-sided printing</title>
            <description>Allows printing two pages on both sides of a single sheet of
            paper</description>
           </function>
```

### Specific Example of Setting Instruction Information

Next, a specific example of the setting instruction information that the artificial intelligence system 150B retrieves from the database 150C in step S40 of FIG. 7A is illustrated. This setting instruction information is an example of a case where the user's question message is, for instance, "Can I save paper?" and the printer 200 is equipped with a double-sided printing function.

```
<setting instruction information>
          <model name>Printer01</model name>
          <setting instruction list>
           <setting instruction>
            <title>set 2-in-1</title>
            <setting item ID>2</setting item ID>
            <setting value>2</setting value>
           </setting instruction>
           <setting instruction>
            <title>set 4-in-1</title>
            <setting item ID>2</setting item ID>
            <setting value>4</setting value>
           </setting instruction>
           <setting instruction>
            <title>perform double-sided printing</title>
            <setting item ID>3</setting item ID>
            <setting value>ON</setting value>
           </setting instruction>
           <setting instruction>
            <title>create shortcut</title>
            <setting item ID>4</setting item ID>
            <setting value>2-in-1 ID copying</setting value>
           </setting instruction>
          </setting instruction list>
          </setting instruction information>
```

Note that if, for example, the printer 200 does not have the double-sided printing function, the following section will be removed from the setting instruction information.

```
            <title>perform double-sided printing</title>
            <setting item ID>3</setting item ID>
            <setting value>ON</setting value>
```

### Specific Example of Message Information

Next, a specific example of the message information generated by the artificial intelligence system 150B in step S45 of FIG. 7A is illustrated. This message information example assumes the user's question message is, for example, "Can I save paper?" and the response message includes three options. The three options are 2-in-1 setting, 4-in-1 setting, and double-sided printing. This message information example also assumes the printer 200 has a double-sided printing function.

```
<message information>
           <message>The following methods are available on your machine.</message>
           <option list>
            <option>
             <title>set 2-in-1</title>
             <setting item ID>2</setting item ID>
             <setting value>2</setting value>
            </option>
            <option>
             <title>set 4-in-1</title>
             <setting item ID>2</setting item ID>
             <setting value>4</setting value>
            </option>
            <option>
             <title>perform double-sided printing</title>
             <setting item ID>3</setting item ID>
             <setting value>ON</setting value>
            </option>
           </option list>
          </message information>
```

Note that if, for example, the printer 200 does not have the double-sided printing function, the following section will be removed from the message information.

```
            <option>
             <title>perform double-sided printing</title>
             <setting item ID>3</setting item ID>
             <setting value>ON</setting value>
            </option>
```

### Examples of Screens displayed by Terminal Device

Next, based on the sequence illustrated in FIGs. 7A and 7B, an example of the response message screen displayed by the terminal device 300 on display part 330 is described.

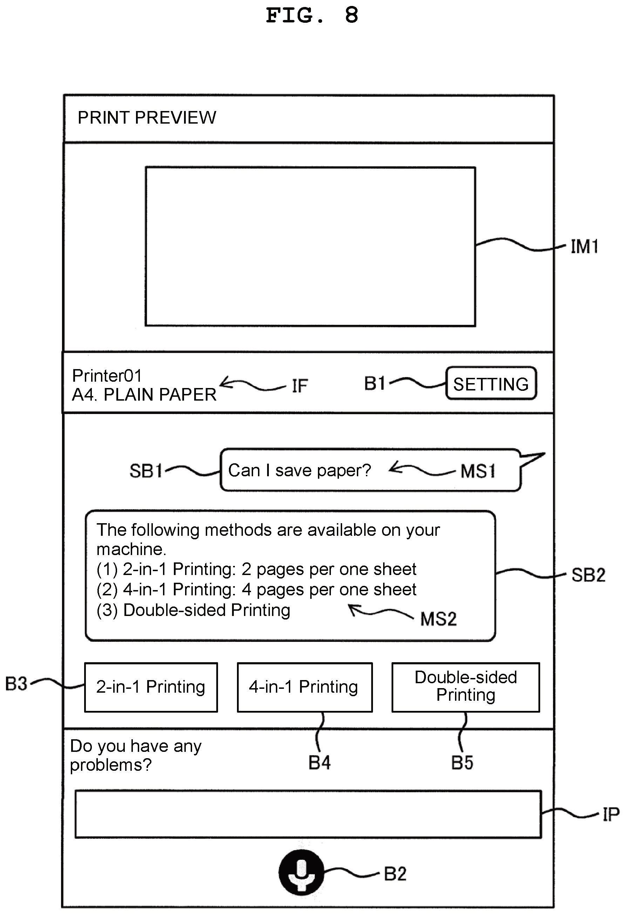

FIG. 8 is a diagram illustrating an example screen of the response message displayed by the terminal device 300 on display part 330 in step S60 of FIG. 7B. As illustrated in FIG. 8, the terminal device 300 displays on the print preview screen: a print preview image IM1; print-related information IF, such as model and sheet size of the printer 200; the setting button B 1; the input area IP; and the voice input button B2. The terminal device 300 displays the question message entered by the user in the input area IP in a speech bubble. When the user operates the setting button B1, the terminal device 300 displays the contents of the current print settings on the print preview screen. When the user operates the voice input button B2, the terminal device 300 inputs the user's voice-based question message. The voice-based question message is an example of a user request concerning the image processing apparatus.

As illustrated in FIG. 8, the terminal device 300 displays a question message MS1 entered by the user in input area IP in a speech bubble SB1. The question message MS1 includes, for example, the message "Can I save paper?". The terminal device 300 displays a response message MS2 to the question message MS1 in a speech bubble SB2 based on message information received from the controller 150A. The response message MS2 includes a message recommending, for example, three print settings as methods to save paper. The three print settings include 2-in-1 printing, 4-in-1 printing, and double-sided printing. The 2-in-1 printing is a layout setting that prints two print images on one sheet. The 4-in-1 printing is a layout setting that prints four print images on one sheet. The terminal device 300 displays a button B3 for selecting the 2-in-1 printing, a button B4 for selecting the 4-in-1 printing, and a button B5 for selecting the double-sided printing.

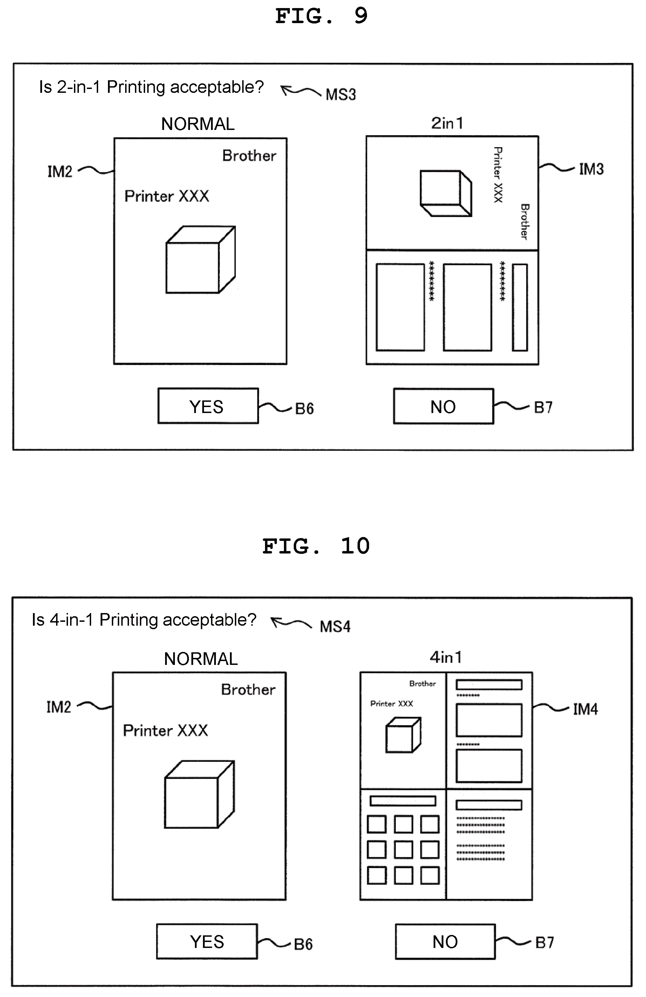

FIG. 9 is an example of a screen displayed in a case where the user presses the button B3 in FIG. 8. As illustrated in FIG. 9, the terminal device 300 displays a message MS3 asking the user if it is acceptable to perform printing using the 2-in-1 printing. Furthermore, the terminal device 300 displays a print preview image IM2 for normal (i.e., 1-in-1) printing and a print preview image IM3 for 2-in-1 printing in a manner allowing comparison. That is, when the response message contains multiple print settings, the terminal device 300 displays images showing the results of performing the print process with each of the multiple print settings on the display part 330. The user can select the 2-in-1 printing by pressing a button B6, and select the 1-in-1 printing instead of the 2-in-1 printing by pressing a button B7.

As illustrated in FIG. 10, the terminal device 300 displays a message MS4 asking the user whether it is acceptable to perform printing using the 4-in-1 printing. The terminal device 300 also displays the print preview image IM2 for normal (i.e., 1-in-1) printing and a print preview image IM4 for the 4-in-1 printing in a manner allowing comparison. That is, when the response message contains multiple print settings, the terminal device 300 displays images showing the results of performing the print process with each of the multiple print settings on the display part 330. The user can select the 4-in-1 printing by pressing the button B6, and select the 1-in-1 printing instead of the 4-in-1 printing by pressing the button B7.

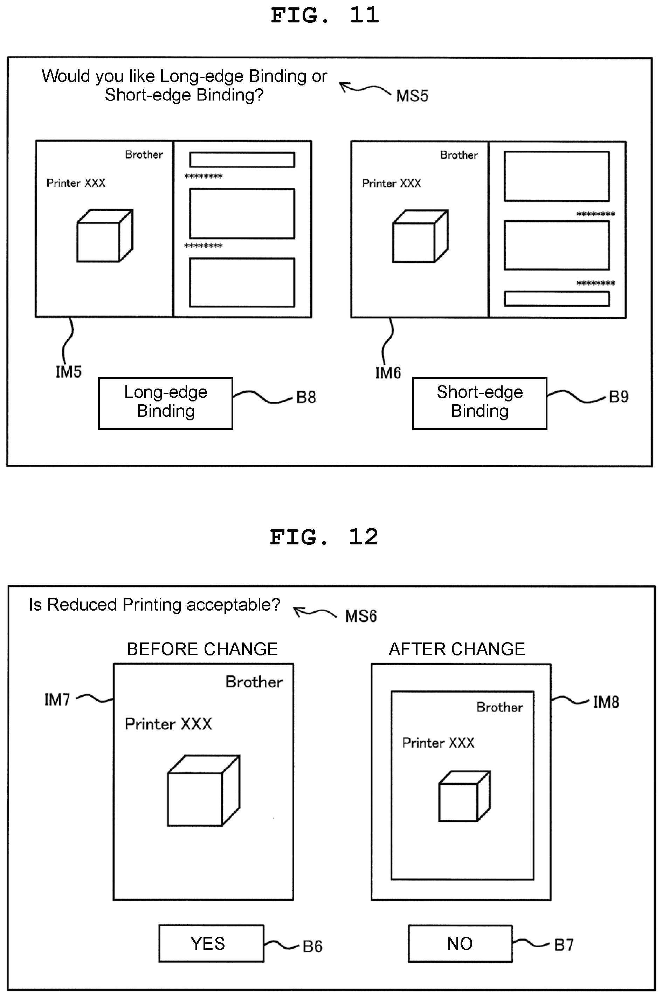

FIG. 11 is an example of a screen displayed in a case where the user presses the button B5 in FIG. 8. As illustrated in FIG. 11, the terminal device 300 displays a message MS5 asking the user whether to use a long-edge binding or a short-edge binding for the double-sided printing type. The terminal device 300 also displays a print preview image IM5 for the long-edge binding and a print preview image IM6 for the short-edge binding in a manner allowing comparison. That is, when the response message contains multiple print settings, the terminal device 300 displays images showing the results of performing the print process with each of the multiple print settings on the display part 330. The user can select the long-edge binding by pressing a button B8 and the short-edge binding by a pressing button B9.

FIG. 12 is a diagram illustrating another example of a screen displayed by the terminal device 300 on the display part 330. FIG. 12 illustrates an example of a case where a response message containing a print setting to reduce the print image size is displayed in response to a question message such as "Can I save ink?". As illustrated in FIG. 12, the terminal device 300 displays a message MS6 asking the user whether it is acceptable to perform printing with the print image reduced in size. Furthermore, the terminal device 300 displays a print preview image IM7 (without image reduction) and a print preview image IM8 (with image reduction) in a manner allowing comparison. The user can select to print with image reduction by pressing the button B6, or select to print without image reduction by pressing the button B7.

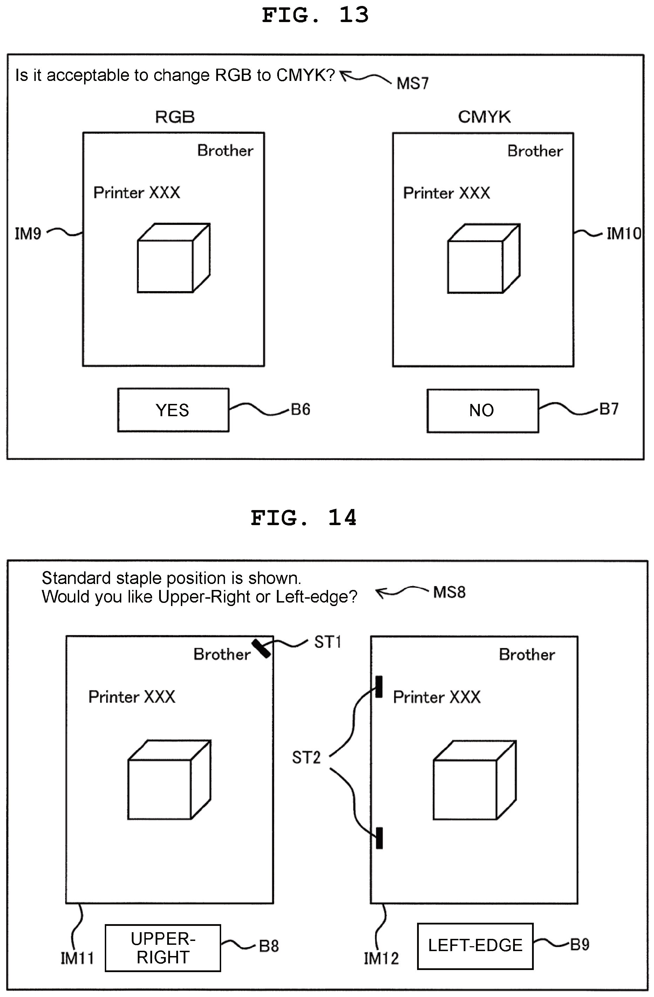

FIG. 13 is a diagram illustrating yet another example of a screen displayed by the terminal device 300 on the display part 330. FIG. 13 illustrates an example of a case where a response message containing print settings to change the color model from RGB to CMYK is displayed in response to a question message such as "Can you reproduce the printed color tone?". As illustrated in FIG. 13, the terminal device 300 displays a message MS7 asking the user whether it is acceptable to perform printing after changing from RGB to CMYK. The terminal device 300 also displays print preview images IM9 (using RGB) and IM10 (using CMYK) side-by-side for comparison. The user can select printing using CMYK by pressing the button B6, or printing using RGB by pressing the button B7.

FIG. 14 is yet another example of a screen displayed by the terminal device 300 on the display part 330. FIG. 14 illustrates an example of a case where, for instance, a response message containing two common stapler positions is displayed in response to a question message such as "Where should I staple the document?". As illustrated in FIG. 14, the terminal device 300 displays a message MS8 asking the user whether to use an upper-right stapling position or a left-edge stapling position. The terminal device 300 also displays a print preview image IM11 showing the upper-right stapling position ST1 and a print preview image IM12 showing the left-edge stapling position ST2. The terminal device 300 displays the print preview images IM11 and IM12, for example, by adjusting the margins according to each stapling position. The user can select the upper-right stapling by pressing a button B8 and select the left-edge stapling by pressing a button B9.

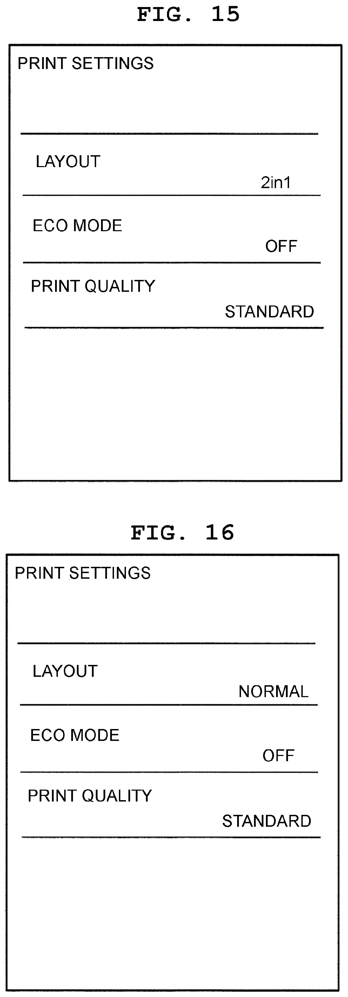

Furthermore, if the response message contains multiple print settings, a setting screen for the print setting selected by the user via a button may be displayed. FIG. 15 is an example diagram showing a print settings screen displayed by the terminal device 300 on display part 330 when the user selects from multiple print settings contained in the response message. FIG. 15 shows an example of the print settings screen when, for example, the user presses button B3 in FIG. 8 to select the 2-in-1 setting. FIG. 16 is an example of a print setting screen for normal, i.e., 1-in-1 printing. The print settings screen in FIG. 16 is displayed by the terminal device 300 on the print preview screen, for example, when the user presses the settings button B1. By displaying the print settings screen of FIG. 15 when the user presses button B3 to select the 2-in-1 setting, the device can notify the user that the print layout setting has changed from normal to 2-in-1. This allows the user to recognize how the print layout setting has been changed.

### Processing performed by Image Processing System in a case of asking Questions regarding Operation of Printer

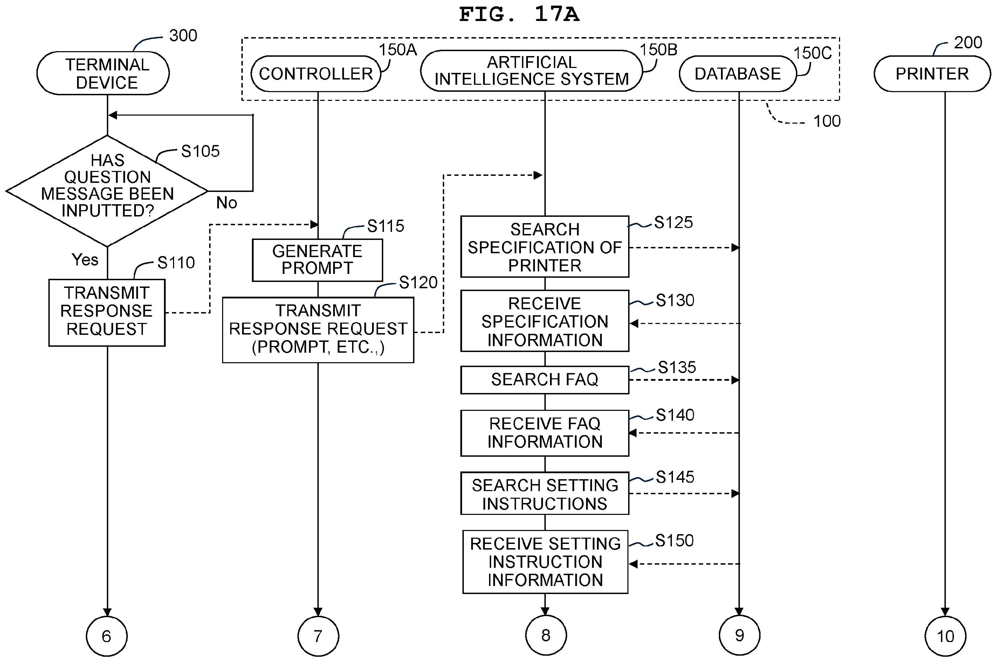

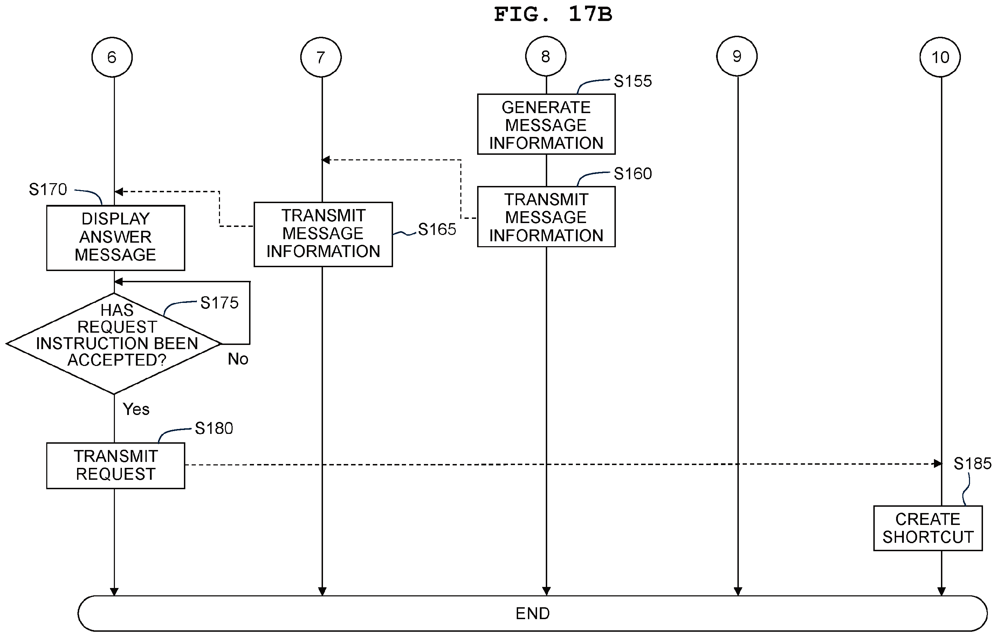

FIGs. 17A and 17B are a sequence diagram showing when a user asks a question about the printer 200 operation and the image processing system 1 outputs an answer to the question. In FIGs. 17A and 17B, the terminal device 300, the controller 150A, the artificial intelligence system 150B, and the printer 200 each perform processing. In this example, the printer 200 is a multifunction device equipped with scanning and copying functions.

In step S105, the terminal device 300 determines whether it has received input from the user of a question message regarding the operation of the printer 200. A question message regarding the printer 200 operation could be, for example, "How do I copy both sides of a driver's license onto one sheet?". The terminal device 300 repeats the processing of step S105 until it determines that a question message input has been received (step S105: No). If the terminal device 300 determines that it has received the input of a question message (step S105: Yes), the terminal device 300 proceeds with the next step S110. The terminal device 300 also receives, along with the input of the question message, the printer ID of the printer 200 selected by the user to perform the copy. The question message regarding the operation of the printer 200 is an example of a user request concerning the image processing apparatus. Upon the Yes determination in step S105, the terminal device 300 accepts the question about the printer 200 as a request. The CPU 310 of the terminal device 300, which performs the processing corresponding to the Yes determination in step S105, is an example of the acceptance part. Furthermore, the Yes determination in step S105 is an example of the accepting process and accepting step.

In step S110, the terminal device 300 transmits a response request to the controller 150A for the question message received in step S105. The response request includes the question message received in step S105 and the printer ID, etc.

In step S115, the controller 150A receives the response request from the terminal device 300. The controller 150A generates a prompt to perform a task on the artificial intelligence system 150B based on the information used in the user's question message. The task includes searching for information about a specific printer 200 within a search scope based on the specific printer 200 identified by the printer ID. The search scope based on the printer 200 is, for example, specification information, FAQ information, and setting instruction information related to the specific model of the printer 200 identified by the printer ID. The task also includes searching for information about the printer 200 within a search scope based on language information used in the user's question message. The search scope based on language information includes, for example, specification information, FAQ information, and the setting instruction information related to terms contained in the question message.

In step S120, the controller 150A transmits a response request to the artificial intelligence system 150B. The response request includes the prompt generated in step S115, the question message input by the user, the printer ID, etc.

The controller 150A causes the artificial intelligence system 150B to perform a task corresponding to the question message received by the terminal device 300 through steps S115 and S120. For example, the controller 150A performs a task to search for the product specifications of the target printer 200 based on the printer ID and generate a list of options containing only those functions supported by the printer 200 that are relevant to the user's question message. Additionally, the controller 150A performs a task to search FAQ information for questions that cannot be determined from the product specifications and generate a list of options containing only the functions supported by the printer 200. Furthermore, the controller 150A performs a task to select a setting item from the setting instruction information based on the generated list of options and generate message information based on the corresponding value range. The processor 110A of the controller 150A, which performs steps S115 and S120, is an example of an execution part. Furthermore, steps S115 and S120 are examples of executing processes and executing steps.

In step S125, the artificial intelligence system 150B searches for specifications of the printer 200 based on the prompt included in the response request received from the controller 150A. At this time, the artificial intelligence system 150B searches for the specifications of the printer 200, identified by its printer ID, from the specification information database DB1 in the database 150C. Specifically, the artificial intelligence system 150B performs the search using an API that searches for product specifications from the printer ID.

In step S130, the artificial intelligence system 150B receives the search results for the specification information from the specification information database DB1.

In step S135, the artificial intelligence system 150B searches the FAQ for the printer 200 based on the prompt included in the response request received from the controller 150A. At this time, the artificial intelligence system 150B searches the FAQ information database DB2 in database 150C for the FAQs related to the printer 200 identified by the printer ID or the specification information received in step S130. Specifically, the artificial intelligence system 150B performs the search using an API that searches past FAQs based on the printer ID.

In step S140, the artificial intelligence system 150B receives the search results for the FAQ information from the FAQ information database DB2.

In step S145, the artificial intelligence system 150B searches for the setting instruction information based on the prompt included in the response request received from the controller 150A. At this time, the artificial intelligence system 150B searches for the setting instruction information related to the specification information received in step S130 or the FAQ information received in step S140 from the setting instruction information database DB3 in database 150C. Specifically, the artificial intelligence system 150B performs the search using an API that searches for setting instruction information.

In step S150, the artificial intelligence system 150B receives the search results for the setting instruction information from the setting instruction information database DB3.

In step S155, the artificial intelligence system 150B generates message information that serves as a response to the user's question message based on specification information, FAQ information, and setting instruction information.

In step S160, the artificial intelligence system 150B transmits the generated message information to the controller 150A.

In step S165, the controller 150A receives the message information from the artificial intelligence system 150B and transmits it to the terminal device 300. The controller 150A may process the message information as necessary to make it suitable for display on the terminal device 300.

In step S170, the terminal device 300 displays a response message to the user's question message on the display part 330 based on the message information received from the controller 150A. The response message includes options for requesting the printer 200. That is, the terminal device 300 presents the user with options based on the response. The CPU 310 of the terminal device 300 executing step S 170 is an example of an output part. Furthermore, step S170 is an example of an output processing and output step.

In step S175, the terminal device 300 determines whether it has received a request instruction from the user to the printer 200. In other words, the terminal device 300 determines whether the user has input a selection operation for an option to make a request to the printer 200. The request may be, for example, creating a shortcut related to a specific function. The terminal device 300 repeats the processing of step S175 until it determines that it has received a request instruction to the printer 200 (step S175: No). If the terminal device 300 determines that it has received a request instruction to the printer 200 (step S175: Yes), the terminal device 300 proceeds with the next step S180.

In step S180, the terminal device 300 transmits the request to the printer 200. Specifically, the terminal device 300 transmits the request corresponding to the selected option to the printer 200 based on the user inputting the selection operation for the presented option. The terminal device 300 may transmit the request to the printer 200 via the service server 100. The CPU 310 of the terminal device 300 executing this step S 180 is one example of a request transmission part.

In step S185, the printer 200 performs processing corresponding to the request received from the terminal device 300. For example, if the request is to create a shortcut for a predetermined function, the printer 200 creates the shortcut on the display part 240. With this, the image processing system 1 completes its processing.

In the sequence of FIGs. 17A and 17B, the terminal device 300 may transmit the request to the printer 200 to the controller 150A. In this case, the controller 150A may, as necessary, cause the artificial intelligence system 150B to perform a task relating to the request and to transmit the request to the printer 200 based on the task execution result. That is, the controller 150A causes the artificial intelligence system 150B to perform a task corresponding to the request based on the user inputting a selection operation for the presented options. The artificial intelligence system 150B in this case is an example of a second artificial intelligence system, and the large language model is an example of a second generative AI. In this case, the task related to the request to the printer 200 can be performed by another language model through a simplified operation.

The specific example of the prompt generated by the controller 150A in step S115 of FIG. 17A is the same as in the case of the aforementioned FIG. 7A.

### Specific Example of Specification Information

Next, a specific example of the specification information acquired by the artificial intelligence system 150B from the database 150C in step S130 of FIG. 17A is illustrated. Note that this specification information is an example where the user's question message is, for instance, "How do I copy both sides of a driver's license onto one sheet?", and the printer 200 is equipped with a double-sided printing function.

```
<specification information>
          <model name>Printer01 </model name>
          <function list>
           <function>
            <title>2-in-1 ID copying</title>
            <description>Copy both sides of a card-sized document onto one side at actual
            size</description>
           </function>
           <function>
            <title>double-sided printing</title>
            <description>Allows printing two pages on both sides of a single sheet of
            paper</description>
           </function>
           <function>
            <title>shortcut creation</title>
            <description>Allows creating convenient shortcut functions on the printer such as
            2-in-1 ID or double-sided copying</description>
           </function>
          </function list>
          </specification information>
```

### Specific Example of FAQ Information

Next, a specific example of FAQ information retrieved by the artificial intelligence system 150B from the database 150C in step S140 of FIG. 17A is illustrated. This FAQ information applies when the user's question message is, for example, "How can I copy both sides of a driver's license onto one sheet?", and a video demonstrating how to position the document is outputted.

```
<FAQ list>
           <FAQ>
            <question>How do I copy both sides of my driver's license onto one
            sheet ?</question>
            <answer>The 2-in-1 ID Copy function allows you to copy both sides of card-sized
            documents like ID cards or identification
certificates onto a single page at their original size.
            When copying customer identification
documents for store operations, you can manage them at
            a clear, original size.</answer>
            <additional steps>
             <title>Confirm placement of document</title>
             <video link>https://xxx/movie1
            </additional steps>
           </FAQ>
          </FAQ list>
```

### Specific Example of Setting Instruction Information

Next, a specific example of the setting instruction information that the artificial intelligence system 150B retrieves from the database 150C in step S150 of FIG. 17A is illustrated. This setting instruction information is an example of a case where the user's question message is, for instance, "How can I copy both sides of a driver's license onto one sheet?", and the printer 200 is equipped with a double-sided printing function.

```
<setting instruction information>
          <model name>Printer01</model name>
          <setting instruction list>
           <setting instruction>
            <title>create shortcut on printer</title>
            <setting item ID>4</setting item ID>
            <setting value>2-in-1 ID copying</setting value>
           </setting instruction>
           <setting instruction>
            <title>perform double-sided printing</title>
            <setting item ID>3</setting item ID>
            <setting value>ON</setting value>
           </setting instruction>
          </setting instruction list>
          </setting instruction information>
```

Note that if, for example, the printer 200 does not have the double-sided printing function, the following section will be removed from the setting instruction information.

```
            <title>perform double-sided printing</title>
            <setting item ID>3</setting item ID>
            <setting value>ON</setting value>
```

### Specific Example of Message Information

Next, a specific example of the message information generated by the artificial intelligence system 150B in step S155 of FIG. 17B is illustrated. This message information example assumes the user's question message is, for example, "How do I copy both sides of a driver's license onto one sheet?" and the response message includes three options. The three options are: creating a shortcut, confirming document placement, and double-sided printing. This message information example also assumes the printer 200 has a double-sided printing function.

```
<message information>
           <message>The following methods are available on your machine. The 2-in-1 ID
           Copy function allows you to copy both sides of card-sized documents like ID cards or
           identification certificates onto a
single page at their original size. When copying customer
           identification documents for store
operations, you can manage them at a clear, original
           size.</message>
           <option list>
            <option>
             <title>create shortcut on printer</title>
             <setting item ID>4</setting item ID>
             <setting value>2-in-1 ID copying</setting value>
            </option>
            <option>
             <title>confirm placement of document</title>
             <video link>https://xxx/movie1</video link>
             <setting value>4</setting value>
            </option>
            <option>
             <title>perform double-sided printing</title>
             <setting item ID>3</setting item ID>
             <setting value>ON</setting value>
            </option>
           </option list>
          </message information>
```

Note that if, for example, the printer 200 does not have the double-sided printing function, the following section will be removed from the message information.

```
            <title>perform double-sided printing</title>
            <setting item ID>3</setting item ID>
            <setting value>ON</setting value>
```

### Examples of Screens displayed by Terminal Device

Next, based on the sequence illustrated in FIGs. 17A and 17B, an example of a screen of the response message displayed by the terminal device 300 on display part 330 is described.

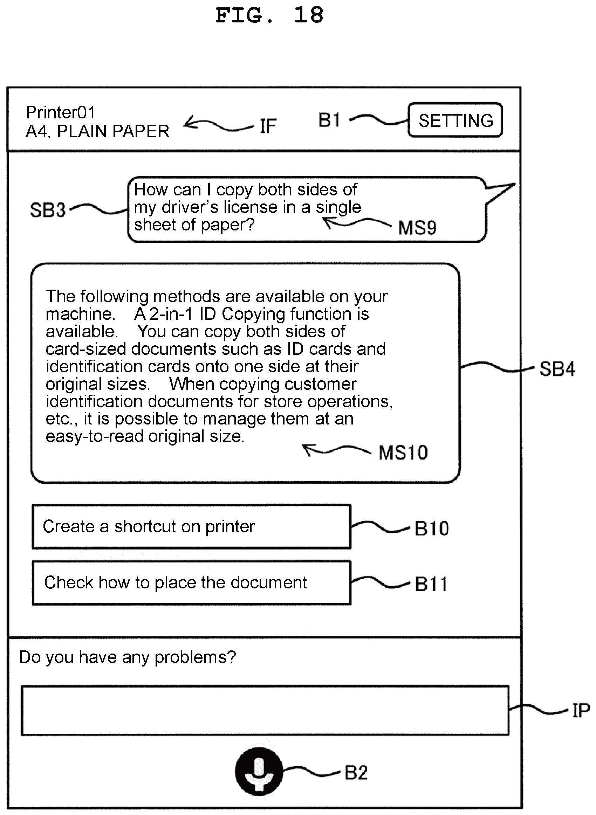

FIG. 18 is a diagram illustrating an example screen of the response message displayed by the terminal device 300 on the display part 330 during step S170 of FIG. 17B. As illustrated in FIG. 18, the terminal device 300 displays the aforementioned printing-related information IF, setting button B1, input area IP, voice input button B2, etc. Furthermore, the terminal device 300 displays the question message MS9 entered by the user in input area IP within speech bubble SB3. The question message MS9 includes, for example, the message "How do I copy both sides of my driver's license onto one sheet?". Based on the message information received from the controller 150A, the terminal device 300 displays a response message MS10 to the question message MS9 in speech bubble SB4. The response message MS10 includes a message recommending the 2-in-1 ID Copy function. The 2-in-1 ID Copy function scans both the front and back sides of a driver's license and prints them at actual size on one side of a sheet. The terminal device 300 displays button B10 to create a shortcut for the 2-in-1 ID Copy function on the printer 200, and button B11 to confirm the placement of the document on the printer 200. The user can create a shortcut for 2-in-1 ID Copy on the printer 200 by pressing button B10. Additionally, the user can play a video explaining how to position the document for 2-in-1 ID Copy by pressing button B11.

### Processing performed by Image Processing System in a case of asking Questions regarding Status of Printer

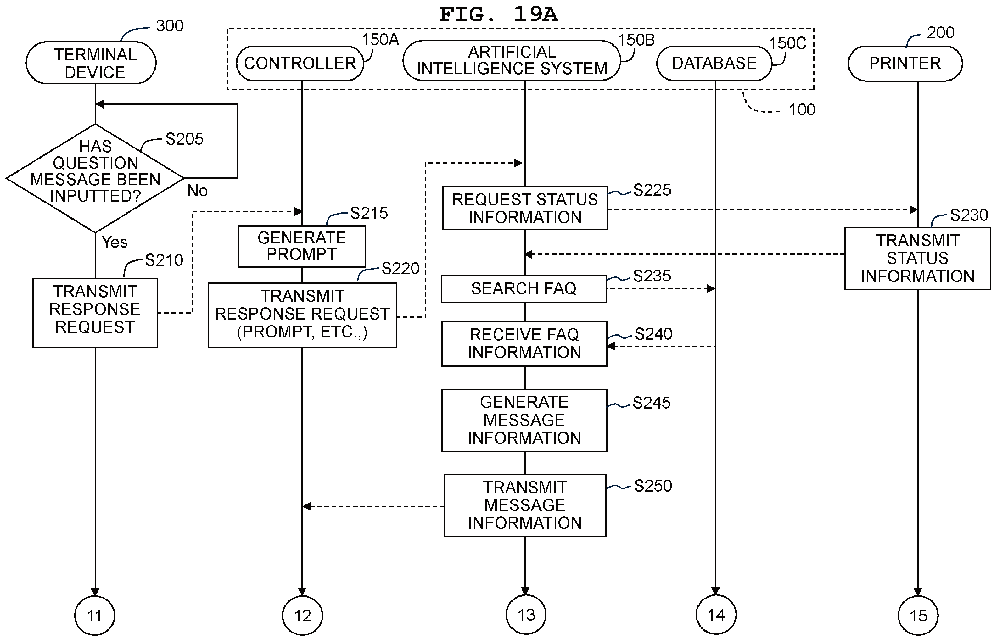

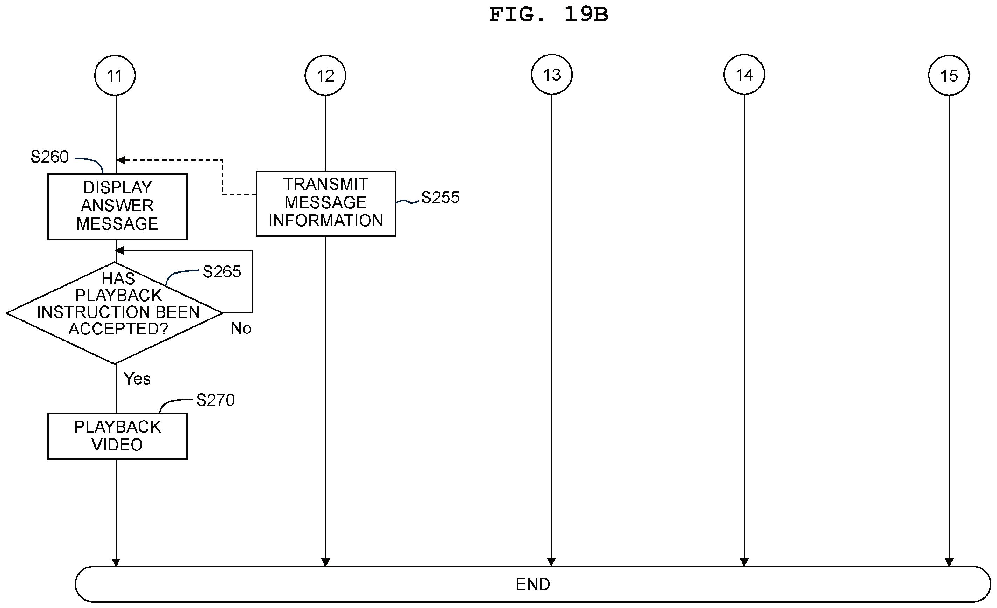

FIGs. 19A and 19B are a sequence diagram showing a case where a user asks a question about the status of the printer 200 and the image processing system 1 outputs an answer to the question. In FIGs. 19A and 19B, the terminal device 300, the controller 150A, the artificial intelligence system 150B, and the printer 200 each perform their respective processes.

In step S205, the terminal device 300 determines whether it has received input of a question message regarding the status of the printer 200 from the user. A question message regarding the status of the printer 200 is, for example, "How can I fix the error?". The terminal device 300 repeats the processing of step S205 until it determines that it has received input of the question message (step S205: No). If the terminal device 300 determines that it has received the input of the inquiry message (step S205: Yes), the terminal device 300 proceeds with the next step S210. The terminal device 300 also receives, along with the input of the inquiry message, the printer ID of the printer 200 experiencing the error, as selected by the user. The question message regarding the status of the printer 200 is an example of a user request relating to the image processing apparatus. Upon the Yes determination in step S205, the terminal device 300 accepts the question about the printer 200 as a request. The CPU 310 of the terminal device 300, which performs the processing corresponding to the Yes determination in step S205, is an example of the acceptance part. Furthermore, the Yes determination in step S205 is an example of the accepting process and accepting step.

In step S210, the terminal device 300 transmits a response request to the controller 150A for the question message received in step S205. The response request includes the question message received in step S205 and the printer ID, etc.

In step S215, the controller 150A receives the response request from the terminal device 300. The controller 150A generates a prompt to instruct the artificial intelligence system 150B to perform a task based on the information used in the user's question message.

In step S220, the controller 150A transmits the response request to the artificial intelligence system 150B. The response request includes the prompt generated in step S215, the question message input by the user, the printer ID, etc.

Through steps S215 and S220, the controller 150A causes the artificial intelligence system 150B to perform a task corresponding to the question message received by the terminal device 300. For example, the controller 150A causes the artificial intelligence system 150B to perform a task including acquiring status information for a specific printer 200 identified by the printer ID. Furthermore, the controller 150A performs a task that includes searching the database 150C for information related to the acquired status information. Specifically, the controller 150A acquires the status information of the target printer 200 from the printer ID and searches for a solution from the FAQ information based on the acquired status information. The controller 150A performs a task to generate a list of options containing the FAQ information search results. The status information is an example of state information. The processor 110A of the controller 150A, which performs steps S215 and S220, is an example of an execution part. Furthermore, steps S215 and S220 are examples of executing processes and executing steps.

In step S225, the artificial intelligence system 150B transmits a request for status information to the printer 200 identified by the printer ID.

In step S230, the printer 200 transmits status information to the artificial intelligence system 150B in response to the request from the artificial intelligence system 150B. The status information is information concerning the state of the printer 200, such as a paper jam, no paper, or no ink.

In step S235, the artificial intelligence system 150B receives status information from the printer 200. Based on the received status information, the artificial intelligence system 150B searches for an FAQ that provides a solution for the condition of the printer 200. At this time, the artificial intelligence system 150B searches for FAQs for the printer 200, identified by its printer ID, from the FAQ information database DB2 in the database 150C. Specifically, the artificial intelligence system 150B performs the search using an API that searches past FAQs based on the printer ID.

In step S240, the artificial intelligence system 150B receives the search results for the FAQ information from the FAQ information database DB2.

In step S245, the artificial intelligence system 150B generates message information that serves as an answer to the user's question based on the received FAQ information.

In step S250, the artificial intelligence system 150B transmits the generated message information to the controller 150A.

In step S255, the controller 150A receives the message information from the artificial intelligence system 150B and transmits it to the terminal device 300. The controller 150A may process the message information as necessary to make it suitable for display on the terminal device 300.

In step S260, the terminal device 300 displays a response message to the user's question message on the display part 330 based on the message information received from the controller 150A. The response message includes an option to play a video of the solution. That is, the terminal device 300 presents the user with options based on the response. The CPU 310 of the terminal device 300 executing this step S260 is an example of an output part. Furthermore, step S260 is an example of an outputting process and an outputting step.

In step S265, the terminal device 300 determines whether it has received a video playback instruction from the user to present a solution. The terminal device 300 repeats the processing of step S265 until it determines that it has received the video playback instruction (step S265: No). If the terminal device 300 determines that it has received the video playback instruction (step S265: Yes), the terminal device 300 proceeds with the next step S270.

In step S270, the terminal device 300 plays a video presenting a solution to the user's question message. With this, the image processing system 1 completes its processing.

The specific example of the prompt generated by the controller 150A in step S215 of FIG. 19A is the same as in the cases described in FIGs. 7A and 17A above.

### Specific Example of Status Information

Next, a specific example of the status information transmitted by the printer 200 in step S230 of FIG. 19A is illustrated. Note that this status information is an example of a case where the status of the printer 200 is a paper jam.

```
<printer status information>
           <basic information>
            <model name>Printer01</model name>
           </basic information>
           <status>
            <code>123</code>
            <description>jam</description>
           </status>
          </printer status information>
```

### Specific Example of FAQ Information

Next, a specific example of the FAQ information retrieved by the artificial intelligence system 150B from the database 150C in step S240 of FIG. 19A is illustrated. Note that this FAQ information is an example of a case where the status of the printer 200 is a paper jam.

```
<FAQ list>
           <FAQ>
            <question>How to clear jam</question>
            <answer>Please refer to the following video to resolve the error.</answer>
            <additional steps>
             <title>How to clear jam on Printer01</title>
             <video link>https://xxx/movie2</video link>
            </additional steps>
           </FAQ>
          </FAQ list>
```

### Specific Example of Message Information

Next, a specific example of the message information generated by the artificial intelligence system 150B in step S245 of FIG. 19A is illustrated.

```
<message information>
           <message> Please refer to the following video to resolve the error.</message>
           <additional steps>
            <title> How to clear jam on Printer01</title>
            <video link>https://xxx/movie2</video link>
           </additional steps>
          </message information>
```

### Examples of Screens displayed by Terminal Device

Next, based on the sequence illustrated in FIGs. 19A and 19B, an example of a screen of the response message displayed by the terminal device 300 on the display part 330 will be described.

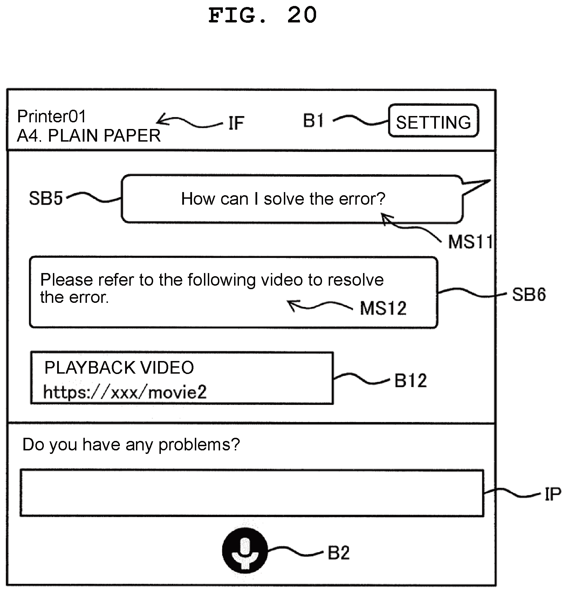

FIG. 20 is a diagram illustrating an example of the response message screen displayed by the terminal device 300 on the display part 330 during step S260 of FIG. 19B. As illustrated in FIG. 20, the terminal device 300 displays the aforementioned printing-related information IF, setting button B1, input area IP, voice input button B2, etc. Furthermore, the terminal device 300 displays the question message MS11 entered by the user in input area IP within speech bubble SB5. The question message MS11 includes, for example, the message "How can I fix the error?". Based on message information received from the controller 150A, the terminal device 300 displays a response message MS12 to question message MS11 in speech bubble SB6. The response message MS12 includes a message prompting the user to resolve the error by referring to a video. The terminal device 300 displays button B12 for playing a video showing how to resolve the error. The user can press button B12 to play the video.

### Effect of Embodiment

The image processing system 1 of this embodiment performs steps S5, etc., steps S15, S20, etc., and step S60, etc. When a user makes a request regarding the printer 200, the image processing system 1 accepts that request in step S5, etc. In steps S15, S20, etc., the image processing system 1 instructs the artificial intelligence system 150B to perform a task corresponding to the request received from the user. In steps S15, S20, etc., the image processing system 1 instructs the artificial intelligence system 150B to perform a task that searches a database 150C containing information about multiple types of printers 200 based on the information used in the request. This enables the output of more accurate responses regarding the printer 200 compared to when the Internet is used as the information source. As a result, according to this embodiment, since the necessary knowledge can be obtained from database 150C, it is possible for the user to use the printer 200 appropriately without acquiring sufficient knowledge.

Furthermore, in this embodiment, the image processing system 1 instructs the artificial intelligence system 150B to perform a task that includes searching within a search range based on a specific printer 200 identified by the printer ID in steps S15, S20, etc. According to this embodiment, searching within a range based on the specific printer 200 enables more efficient searching than searching the entire database.

Furthermore, in this embodiment, the image processing system 1 instructs the artificial intelligence system 150B to acquire status information of the specific printer 200 in step S235 and to search for information related to the acquired status information. This enables a more efficient search than searching the entire database.

Furthermore, in this embodiment, the image processing system 1 instructs the artificial intelligence system 150B to perform a task in steps S15, S20, etc., that includes searching within a search range based on the language used in the question message. According to this embodiment, determining the search range based on the language used in the question message enables more efficient searching than searching the entire database.

Furthermore, in this embodiment, the image processing system 1 generates an appropriate prompt corresponding to the question message in step S15. This enables obtaining highly accurate search results from the artificial intelligence system 150B.

Furthermore, in this embodiment, when the response message includes multiple print setting options, the image processing system 1 enables the user to select an option. This allows the execution of the desired print setting selected by the user when multiple print settings suitable for the print image are available.

Furthermore, in this embodiment, when the response message includes multiple print setting options, the image processing system 1 displays the image resulting from executing the print process with each print setting. This allows the system to preview the results of executing the print process with each print setting for the user when multiple print settings are suitable for the print image.

Furthermore, in this embodiment, when multiple print settings are suitable for the print image, the image processing system 1 displays the screen for the desired print setting selected by the user from among them. This allows the user to be notified of and recognize how to change the print settings.

Furthermore, in this embodiment, the image processing system 1 accepts a question message from the user regarding the printer 200 in step S5, etc. The image processing system 1 instructs the artificial intelligence system 150B to search for an answer to the received question in steps S15, S20, etc. The image processing system 1 outputs the result of the search based on the question as an answer in step S60, etc. Consequently, according to this embodiment, the user can appropriately use the printer 200 without acquiring sufficient knowledge.

Furthermore, in this embodiment, the image processing system 1 presents the user with options based on the response from the artificial intelligence system 150B in step S170. When the user selects one of the options, the image processing system 1 transmits a request corresponding to the selected option to the printer 200 in step S180. According to this embodiment, by presenting options for requests based on the response from the artificial intelligence system 150B, the user can perform requests to the printer 200 through simple operations.

### Modifications

The present disclosure is not limited to the embodiments described above, and various modifications are possible within the scope that does not depart from the spirit and technical concept thereof.

For example, the disclosure may be applied when a user prints by directly operating the printer 200 without using the terminal device 300. A specific example of this modification is described below.

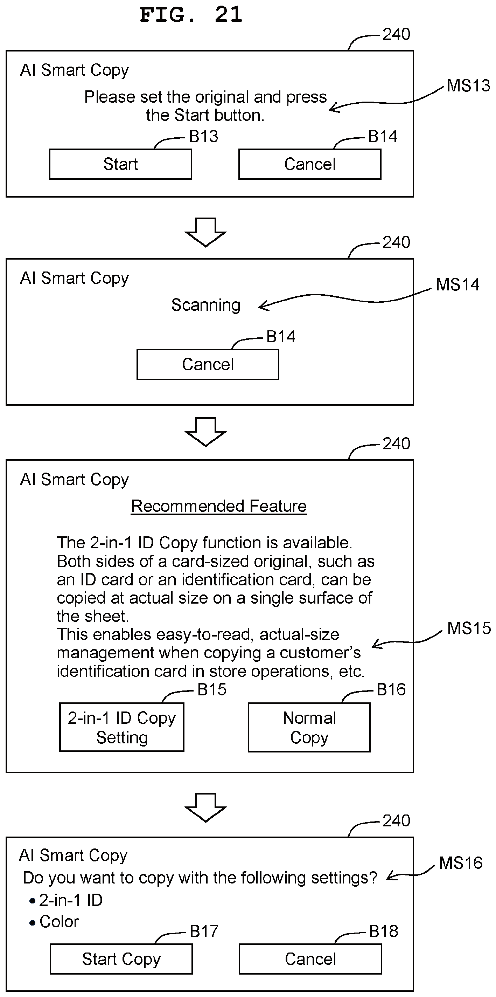

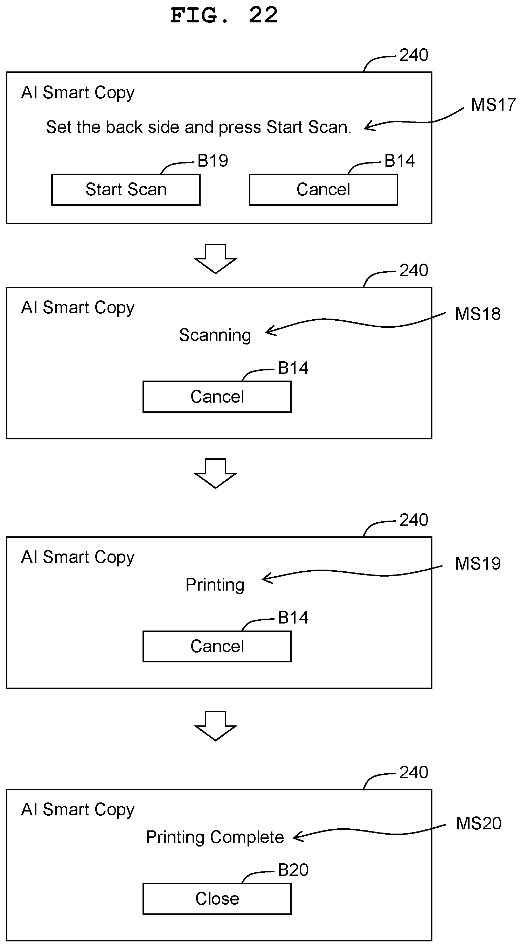

FIGs. 21 and 22 are examples of response message screens displayed by the printer 200 on its display part 240 when a user prints by directly operating the printer 200. FIGs. 21 and 22 illustrate an example where the printer 200 is a multifunction device equipped with scanning and copying functions, copying a card containing information on both sides. The card is an identification document of card size, such as a driver's license, ID card, or business card. In the examples of FIGs. 21 and 22, the printer 200 displays the text "AI Smart Copy" representing the copy function that provides response messages using the artificial intelligence system 150B.

As illustrated in FIG. 21, the printer 200 displays message MS13 on display 240, prompting the user to set the original document to be copied and perform the copy. The user can select to perform the copy by pressing button B13 or select to cancel the copy by pressing button B14. For example, if the user sets the card's front side and presses button B13, the printer 200 performs a scan of the card's front side using the default copy settings. At this time, the printer 200 displays message MS14 notifying that scanning is in progress and button B14 on display part 240.

Next, the printer 200 displays message MS15 on display 240, asking the user whether to perform a 2-in-1 ID copy. The message MS15 is one example of a response to the request. The user can select to change the copy setting to 2-in-1 ID copy by pressing button B15, or select not to change the copy setting by pressing button B16. The copy setting is an example of an image processing condition, and buttons B15 and B16 are examples of a selection part where the copy setting can be selected.

When the user presses the button B15, the printer 200 displays a message MS16 on the display 240, asking the user whether to perform the copy with the copy setting as 2-in-1 ID copy and color. The user can select to set the copy setting to 2-in-1 ID copy and color by pressing button B17, or cancel the copy execution by pressing button B18.

When the user presses button B17, as illustrated in FIG. 22, the printer 200 displays a message MS17 on the display 240, prompting the user to set the card's back side and perform scanning. The user can select to perform the scan by pressing button B19, or select to cancel the scan by pressing button B14. When the user sets the back side of the card and presses button B19, the printer 200 performs the scan of the back side of the card. At this time, the printer 200 displays a message MS18 notifying that the scan is in progress and button B14 on display part 240.

Afterwards, the printer 200 prints both the front and back sides of the card at actual size on one side of the sheet. At this time, the printer 200 displays a message MS19 notifying that printing is in progress and button B14 on the display part 240. Upon completing printing, the printer 200 displays a message MS20 indicating printing completion and button B20 on display part 240. The user can close the screen and complete the copy by pressing button B20.

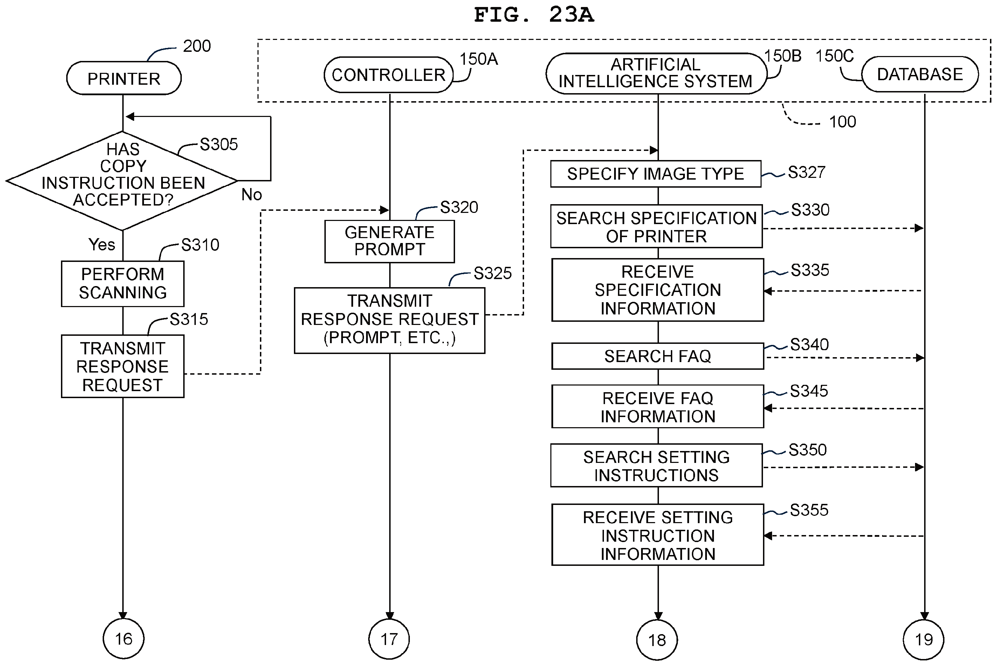

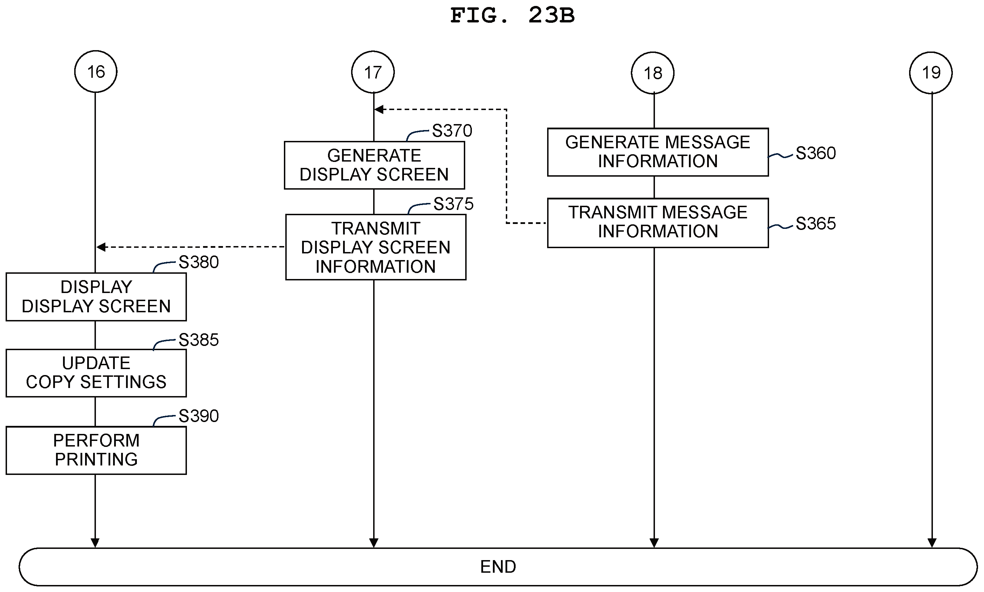

FIGs. 23A and 23B are a sequence diagram illustrating the processing performed by the printer 200, the controller 150A, and the artificial intelligence system 150B, respectively, to perform the screen displays illustrated in FIGs. 21 and 22.

In step S305, the printer 200 determines whether it has received a copy instruction from the user indicating execution of a copy. The printer 200 repeats the processing of step S305 until it determines that it has received the copy instruction (step S305: No). If the printer 200 determines that it has received the copy instruction (step S305: Yes), the printer 200 proceeds with the next step S310.

In step S310, the printer 200 performs scanning of the document to be copied using the default copy settings. That is, the printer 200 accepts the image to be processed by the printer 200. The scanned image is one example of an image to be processed. The controller 210 of the printer 200 executing this step S310 is one example of an acceptance part. Furthermore, the controller 210 of the printer 200 is one example of a computer, and step S310 is one example of a receiving process and receiving step.

In step S315, the printer 200 transmits a response request to the controller 150A. The response request includes the scanned image scanned in step S310 and the printer ID, etc. The scanned image may be the image data itself or link information for the image data, etc. The link information is, for example, a URL indicating the storage location of the image data.

In step S320, the controller 150A receives the response request from the terminal device 300. Based on the scan image received from the terminal device 300, the controller 150A generates a prompt to instruct the artificial intelligence system 150B to perform a task.

In step S325, the controller 150A transmits the response request to the artificial intelligence system 150B. The response request includes the prompt generated in step S320, the path to the scan image storage location, the printer ID, etc.

The controller 150A causes the artificial intelligence system 150B to perform a task that includes searching for the scan image copy settings via steps S320 and S325. The processor 110A of the controller 150A, which performs steps S320 and S325, is an example of an execution part. Furthermore, steps S320 and S325 are examples of an executing process and an executing step.

In step S327, the artificial intelligence system 150B accesses the path of the scanned image included in the response request and acquires the scanned image. The artificial intelligence system 150B then identifies the type of the acquired scanned image.

In step S330, the artificial intelligence system 150B searches for specifications of the printer 200 based on the prompt included in the response request received from the controller 150A. At this time, the artificial intelligence system 150B searches the specification information database DB1 in the database 150C for the specifications of the printer 200 identified by the printer ID, specifically those specifications related to the scan image type identified in step S327. Specifically, the artificial intelligence system 150B performs the search using an API that searches for product specifications based on the printer ID.

In step S335, the artificial intelligence system 150B receives the search results for the specification information from the specification information database DB1.

In step S340, the artificial intelligence system 150B searches the FAQ for the printer 200 based on the prompt included in the response request received from the controller 150A. At this time, the artificial intelligence system 150B searches for the FAQ of the printer 200, identified by the printer ID, from the FAQ information database DB2 in the database 150C. Specifically, the artificial intelligence system 150B performs the search using an API that searches for past FAQs based on the printer ID.

In step S345, the artificial intelligence system 150B receives the search results for the FAQ information from the FAQ information database DB2.

In step S350, the artificial intelligence system 150B searches for the setting instruction information based on the prompt included in the response request received from the controller 150A. At this time, the artificial intelligence system 150B searches for the setting instruction information related to the specification information received in step S335 or the FAQ information received in step S345 from the setting instruction information database DB3 in database 150C. Specifically, the artificial intelligence system 150B performs the search using an API that searches for the setting instruction information.

In step S355, the artificial intelligence system 150B receives the search results for the setting instruction information from the setting instruction information database DB3.

In step S360, the artificial intelligence system 150B generates message information related to copy settings suitable for the scanned image based on the specification information, the FAQ information, and the setting instruction information.

In step S365, the artificial intelligence system 150B transmits the generated message information to the controller 150A.

In step S370, the controller 150A receives the message information from the artificial intelligence system 150B and creates a display screen to present the message information to the user.

In step S375, the controller 150A transmits the display screen information generated in step S370 to the printer 200.

In step S380, the printer 200 displays the display screen on the display part 240 based on the display screen information received from the controller 150A. The display screen includes message information related to copy settings suitable for the scanned image. That is, the printer 200 outputs copy settings suitable for the scanned image. The controller 210 of the printer 200 executing this step S380 is an example of an output part. Furthermore, step S380 is an example of an outputting process and outputting step.

In step S385, the printer 200 updates the copy settings. The printer 200 updates the copy settings based on input content entered by the user via the operation part 250 in response to the message displayed on the display part 240 in step S380.

In step S390, the printer 200 performs printing of the scanned image based on the copy settings updated in step S385. With this, the image processing system 1 completes its processing.

### Specific Example of Prompt

Next, a specific example of a prompt generated by the controller 150A in step S320 of FIG. 23A is illustrated. Note that the prompts illustrated below may be pre-generated and stored in the memory 115A of the controller 150A, etc. Alternatively, the controller 150A may generate them in real time in response to a response request from the printer 200.

### Prompt

Please respond to the question message following the example below.
- Search the product specifications for the target printer using its printer ID, and create a list of options containing only functions supported by the printer.
- For questions that cannot be determined from the product specifications, search the FAQ results and create a list of options containing only the functions supported by the printer.
- If a current status of the printer is required, acquire the status and suggest solutions based on the acquired status.
- If the input message contains an image link, download the image, identify the document type, and present recommended options appropriate for the document type.
- If the options are unknown, perform the following steps.
- If the operation procedure is known, output the operation procedure.
- If the operation procedure is unknown, output an empty <message information></message information>.

The following tools can be used:
- API to search product specifications using printer ID
   https://xxx/api1/doc
- API to search past FAQs
   https://xxx/api2/doc
- API to search setting instructions
   https://xxx/api3/doc
- API to acquire status of the printer
   https://xxx/api4/doc

The controller 150A inputs the information illustrated in the following input example into the artificial intelligence system 150B along with the above prompt.

### Input Example:

```
          <input message> https://xxx/image1</input message>
          <printer ID>0000</printer ID>
```

In step S327 of FIG. 23A, the artificial intelligence system 150B accesses the path included in the response request to obtain the scanned image. It then identifies the type of the scanned image. In this example, the artificial intelligence system 150B identifies the type of the scanned image as an ID card. Below is a specific example of the specification information obtained from the database 150C.

### Specific Example of Specification Information

Next, FIG. 23A, step S335 illustrates a specific example of specification information that the artificial intelligence system 150B acquires from the database 150C. Note that this specification information is an example for when the printer 200 is equipped with a double-sided printing function.

```
<specification information>
          <model name>Printer01</model name>
          <function list>
           <function>
            <title>eco mode</title>
            <description>Allows reducing ink consumption by 50%</description>
           </function>
           <function>
            <title>2-in-1 printing</title>
            <description>Allows printing two pages on a single sheet of paper</description>
           </function>
           <function>
            <title>4-in-1 printing</title>
            <description>Allows printing four pages on a single sheet of paper</description>
           </function>
           <function>
            <title>double-sided printing</title>
            <description>Allows printing two pages on both sides of a single sheet of
            paper</description>
           </function>
           <function>
            <title>shortcut creation</title>
            <description>Allows creating convenient shortcut functions on the printer such as
            2-in-1 ID or double-sided copying</description>
           </function>
           <function>
            <title>2-in-1 ID copying</title>
            <description>Copy both sides of a card-sized document onto one side at actual
            size</description>
           </function>
          </function list>
          </specification information>
```

Note that if, for example, the printer 200 does not have the double-sided printing function, the following section will be removed from the specification information.

```
           <function>
            <title>double-sided printing</title>
            <description>Allows printing two pages on both sides of a single sheet of
            paper</description>
          </function>
```

The specific example of FAQ information that the artificial intelligence system 150B acquires from the database 150C in step S345 of FIG. 23A is the same as in the case of the aforementioned FIG. 17A.

### Specific Example of Setting Instruction Information

Next, a specific example of the setting instruction information that the artificial intelligence system 150B acquires from the database 150C in step S355 of FIG. 23A is illustrated. Note that this is an example for when the printer 200 is equipped with a double-sided printing function.

```
<setting instruction information>
          <model name>Printer01</model name>
          <setting instruction list>
           <setting instruction>
            <title>eco mode</title>
            <setting item ID>1</setting item ID>
            <setting value>ON</setting value>
           </setting instruction>
           <setting instruction>
            <title>2-in-1 printing</title>
            <setting item ID>2</setting item ID>
            <setting value>2</setting value>
           </setting instruction>
           <setting instruction>
            <title>4-in-1 printing</title>
            <setting item ID>2</setting item ID>
            <setting value>4</setting value>
           </setting instruction>
           <setting instruction>
            <title>double-sided printing</title>
            <setting item ID>3</setting item ID>
            <setting value>ON</setting value>
           </setting instruction>
           <setting instruction>
            <title> shortcut creation</title>
            <setting item ID>4</setting item ID>
            <setting value>2-in-1 ID copying</setting value>
           </setting instruction>
           <setting instruction>
            <title> 2-in-1 ID copying</title>
            <setting item ID>5</setting item ID>
            <setting value>2</setting value>
           </setting instruction>
          </setting instruction list>
          </setting instruction information>
```

Note that if, for example, the printer 200 does not have the double-sided printing function, the following section will be removed from the setting instruction information.

```
            <title>perform double-sided printing</title>
            <setting item ID>3</setting item ID>
            <setting value>ON</setting value>
```

### Specific Example of Message Information

Next, a specific example of the message information generated by the artificial intelligence system 150B in step S360 of FIG. 23B is illustrated.

```
<message information>
           <message>The following methods are available on your machine.</message>
           <option list>
            <option>
             <title>set 2-in-1 ID copying</title>
             <setting item ID>5</setting item ID>
             <setting value>2</setting value>
            </option>
           </option list>
          </message information>
```

In the modified example described above, the image processing system 1 receives the scan image to be processed in step S310. In steps S320 and S325, the image processing system 1 instructs the artificial intelligence system 150B to search for copy settings suitable for the received scan image. In step S380, the image processing system 1 displays the copy settings obtained as the search result. According to this modified example, copy settings suitable for the scanned image can be presented to the user.

Furthermore, while the above describes the artificial intelligence system 150B performing searches using each API, this is not limited to this approach. For example, the controller 150A may perform searches using each API and output the search results to the artificial intelligence system 150B as part of a prompt. For example, since a specification search can be performed if the printer ID is known, the controller 150A may perform the specification search, generate a prompt containing the search results, and output it to the artificial intelligence system 150B.

### Specific Example of Prompt

A specific example of a prompt generated by the controller 150A in this modified example is illustrated. Note that the prompt illustrated below is an example where the controller 150A performs a specification search and includes the search results in the input.

### Prompt

Please respond to the message following the example below.
- Create recommended setting values containing only functions supported by the target printer, based on a product specification of the target printer.
- For questions that cannot be determined from the product specifications, search the FAQ results and create recommended setting values containing only functions supported by the target printer.
- If the recommended setting values are unknown, output an empty <message information></message information>.

The following tools can be used:
- API to search past FAQs
   https://xxx/api2/doc
- API to search setting instructions
   https://xxx/api3/doc

The controller 150A inputs the information of the following input example into the artificial intelligence system 150B along with the above prompt. This input example illustrates a case where a user inputs a question message regarding print settings, such as "Can I save ink?".

### Input Example:

```
          <input message>Can I save paper?</input message>
          <specification information>
          <model name>Printer01</model name>
          <function list>
           <function>
            <title>eco mode</title>
            <description>Allows reducing ink consumption by 50%</description>
           </function>
           <function>
            <title>2-in-1 printing</title>
            <description>Allows printing two pages on a single sheet of paper</description>
           </function>
           <function>
            <title>4-in-1 printing</title>
            <description>Allows printing four pages on a single sheet of paper</description>
           </function>
           <function>
            <title>double-sided printing</title>
            <description>Allows printing two pages on both sides of a single sheet of
            paper</description>
           </function>
           <function>
            <title>shortcut creation</title>
            <description>Allows creating convenient shortcut functions on the printer such as
            2-in-1 ID or double-sided copying</description>
           </function>
          </function list>
        </specification information>
```

In response to the prompt and input example information, the artificial intelligence system 150B searches the FAQ information database DB2 and the setting instruction information database DB3. The specific examples of FAQ information and setting instruction information received by the artificial intelligence system 150B are the same as the example in FIG. 23A. Subsequently, the artificial intelligence system 150B generates the message information for the following output example and transmits it to the controller 150A.

### Output Example:

```
          <message information>
           <message>The following methods are available on your machine.</message>
           <recommended setting values>
            <option>
             <title>set eco mode</title>
             <setting item ID>1</setting item ID>
             <setting value>ON</setting value>
            </option>
            <option>
             <title>set 2-in-1 printing</title>
             <setting item ID>2</setting item ID>
             <setting value>2</setting value>
            </option>
            <option>
             <title>set 4-in-1 printing</title>
             <setting item ID>2</setting item ID>
             <setting value>4</setting value>
            </option>
           </recommended setting values>
          </message information>
```

Furthermore, in the above, the terminal device 300 may accept input from the user specifying the search range within database 150C as a request. An input specifying the search range may be, for example, a question message such as "Tell me if the solution to the error currently occurring is written in this printer's FAQ." In this case, in steps S15, S20 etc., the controller 150A causes the artificial intelligence system 150B to perform a task, which includes searching for information related to the printer 200 within the search range accepted by the terminal device 300. According to this modification, determining the user's desired search range enables searching for the information source needed by the user, rather than searching the entire database.

Furthermore, by incorporating, for example, an application corresponding to the functions of the controller 150A and a large-scale language model into the terminal device 300, the terminal device 300 may perform processing without going through the service server 100. In this case, it is possible to incorporate the functions of the controller 150A and the artificial intelligence system 150B into the terminal device 300.

Furthermore, the above embodiment described a case where the image processing is printing processing by the printer 200, but this is not limited thereto. For example, if the image processing apparatus is a display device such as a display, the image processing may be display processing. Also, for example, if the image processing apparatus is a multifunction device including a fax function, the image processing may be scanning processing or copying processing. Furthermore, while the above embodiment described a large language model (LLM) as an example of generative AI, a small language model (Small Language Model) or Stable Diffusion may be adopted instead.

Further, the sequence diagrams illustrated in FIGs. 7A, 7B, 17A, 17B, 19A, 19B, 23A, and 23B do not limit the present disclosure to the procedures illustrated in the sequence diagrams. A procedure may be added, or deleted, with respect to the procedures described in the present embodiment, within the range not departing from the spirit and the technical concept of the present disclosure, and the order of the procedures described in the present embodiment may be changed, etc., within the range not departing from the spirit and the technical concept of the present disclosure.

Furthermore, in addition to the description in the foregoing, the technique, procedure, method, etc., based on the embodiment and each of the modifications may be appropriately combined and used.

Furthermore, although specific examples are not given, the present disclosure may be implemented with various modifications within the scope not departing from the spirit of the present disclosure.

## Claims

1. An image processing system including an image processing apparatus and a first artificial intelligence system having a first generative AI, comprising:
an acceptance part configured to accept an image processing instruction to the image processing apparatus from a user, the acceptance part being configured to accept identification information of the image processing apparatus and a request relating to the image processing apparatus from the user; and
an output part configured to receive a performance result of a task from an execution part and to output a response to the request based on the performance result,
wherein the execution part is configured to cause the first artificial intelligence system to perform the task in accordance with the request accepted by the acceptance part, and
the task includes searching for information relating to the image processing apparatus specified by the identification information from a database relating to a plurality of types of image processing apparatuses based on information included in the request.

2. The image processing system according to claim 1, wherein the execution part is configured to cause the first artificial intelligence system to perform the task including searching for information relating to a specific image processing apparatus specified by the identification information within a search scope based on the specific image processing apparatus.

3. The image processing system according to claim 1 or 2, wherein the execution part is configured to cause the first artificial intelligence system to perform the task including: obtaining status information of the specific image processing apparatus; and searching for information relating to the obtained status information.

4. The image processing system according to claim 1, 2 or 3, wherein the execution part is configured to cause the first artificial intelligence system to perform the task including searching for information relating to the image processing apparatus within a search scope based on language information included in the request.

5. The image processing system according to any of claims 1 to 4, wherein
the acceptance part is configured to accept an input specifying a search scope in the database as the request from the user, and
the execution part is configured to cause the first artificial intelligence system to perform the task including searching for information relating to the image processing apparatus within the search scope accepted by the acceptance part.

6. The image processing system according to any one of claims 1 to 5, wherein the execution part is configured to:
generate a prompt for causing the first artificial intelligence system to perform the task based on the information included in the request; and
input the generated prompt to the first artificial intelligence system.

7. The image processing system according to any of claims 1 to 6, wherein
the acceptance part is configured to accept an image to be processed by the image processing apparatus,
the execution part is configured to cause the first artificial intelligence system to perform the task including searching for an image processing condition for the image to be processed by the image processing apparatus, and
the output part is configured to output the image processing condition.

8. The image processing system according to claim 7, further comprising:
a selection part configured to select the image processing condition from a plurality of image processing conditions; and
an instruction transmission part configured to transmit the image processing instruction based on the image processing condition selected by the selection part to a specific image processing apparatus,
and/or
further comprising a display part configured to display a plurality of images which have been processed under a plurality of image processing conditions including the image processing condition, respectively,
and/or
further comprising:
a selection part configured to select the image processing condition from a plurality of image processing conditions; and
a display part configured to display a setting screen for setting the image processing condition selected by the selection part.

9. The image processing system according to any of claims 1 to 8, wherein
the acceptance part is configured to accept a question relating to the image processing apparatus as the request,
the execution part is configured to cause the first artificial intelligence system to perform the task including searching for an answer to the question, and
the output part is configured to output the answer.

10. The image processing system according to any of claims 1 to 9, wherein
the output part is configured to present a plurality of options to the user based on the response, and
the image processing system further comprises a request transmission part configured to transmit a request corresponding to an option to the image processing apparatus, in response to a selection operation of the option from the plurality of options by the user,
preferably wherein the execution part is configured to cause a second artificial intelligence system having a second generative AI to perform the task in accordance with the request, in response to the selection operation of the option from the plurality of options by the user.

11. The image processing system according to any of claims 1 to 10, further comprising:
a terminal device; and
a server,
wherein the terminal device includes the acceptance part and the output part, and
the server includes the execution part.

12. An image processing program causing a computer to perform:
an accepting process for accepting an image processing instruction to an image processing apparatus from a user, the acceptance process being for accepting identification information of the image processing apparatus and a request relating to the image processing apparatus from the user; and
an outputting process for receiving a performance result of a task from an executing process and for outputting a response to the request based on the performance result,
wherein the executing process is a process for causing a first artificial intelligence system to perform the task in accordance with the request accepted in the accepting process, and
the task includes searching for information relating to the image processing apparatus specified by the identification information from a database relating to a plurality of types of image processing apparatuses based on information included in the request.

13. An image processing method comprising:
an accepting step of accepting an image processing instruction to an image processing apparatus from a user, the accepting step being a step of accepting identification information of the image processing apparatus and a request relating to the image processing apparatus from the user; and
an outputting step of receiving a performance result of a task from an executing step and of outputting a response to the request based on the performance result,
wherein the executing step is a step of causing a first artificial intelligence system to perform the task in accordance with the request accepted in the accepting step, and
the task includes searching for information relating to the image processing apparatus specified by the identification information from a database relating to a plurality of types of image processing apparatuses based on information included in the request.

14. The image processing method according to claim 13, wherein the executing step is a step of causing the first artificial intelligence system to perform the task including searching for information relating to a specific image processing apparatus specified by the identification information within a search scope based on the specific image processing apparatus,
and/or
wherein the executing step is a step of causing the first artificial intelligence system to perform the task including searching for information relating to the image processing apparatus within a search scope based on language information included in the request.

15. The image processing method according to claim 13 or 14, wherein
the accepting step is a step of accepting an input specifying a search scope in the database as the request from the user, and
the executing step is a step of causing the first artificial intelligence system to perform the task including searching for information relating to the image processing apparatus in the search scope accepted in the accepting step,
and/or
wherein
the acceptance step is a step of accepting an image to be processed by the image processing apparatus,
the executing step is a step of causing the first artificial intelligence system to perform the task including searching for an image processing condition for the image to be processed by the image processing apparatus, and
the outputting step is a step of outputting the image processing condition.
